# FASCICULE DE BREVET EUROPEEN

(11) **EP 2 117 809 B1**
(45) Date de publication et mention de la délivrance du brevet: **30.06.2010**
(21) Numéro de dépôt: 08761968.0
(22) Date de dépôt: 23.01.2008
(51) Int. Cl.: B29C 51/16

(54) **DISPOSITIF ET PROCEDE DE THERMOFORMAGE DE RECIPIENTS DECORES POUR METTRE EN PLACE DES ETIQUETTES DE FOND SUR DES RECIPIENTS THERMOFORMES**
VORRICHTUNG UND VERFAHREN ZUM THERMOFORMEN VON ZIERGEFÄSSEN ZUM AUFBRINGEN VON BODENETIKETTEN AUF THERMOGEFORMTEN GEFÄSSEN
DEVICE AND METHOD FOR THERMOFORMING DECORATED VESSELS IN ORDER TO PLACE BOTTOM LABELS ON THERMOFORMED VESSELS

(30) Priorité: 24.01.2007 FR 0752855
(43) Date de publication de la demande: 18.11.2009
(73) Titulaire: Erca Formseal, 91940 Les Ulis (FR)
(72) Inventeur: SCHWAB, Dominique, F-78000 Versailles (FR); GANDON, Bernard, F-78730 Saint-Arnoult-en-Yvelines (FR)
(74) Mandataire: Intes, Didier Gérard André
(86) Numéro de dépôt international: PCT/FR2008/050101
(87) Numéro de publication internationale: WO 2008/110711

(56) Documents cités:
- EP-A- 1 710 073
- DE-A1-102004 059 962
- DE-U1- 20 317 371
- DE-U1-202004 017 669
- DATABASE WPI Section Ch, Week 199631 Thomson Scientific, London, GB; Class A32, AN 1996-305132 XP002453027 -& JP 08 132520 A (IDEMITSU PETROCHEM CO) 28 mai 1996 (1996-05-28)

## Description

La présente invention concerne un procédé de fabrication de récipients par thermoformage et de mise en place sur ces récipients, de décors comprenant des étiquettes de fond, dans lequel on fournit au moins un premier bloc de moule qui comporte au moins une chambre de thermoformage ayant un bord ouvert et un fond, et on thermoforme un récipient dans cette chambre alors que ledit bloc de moule est en position de travail.

Pour mettre en place des étiquettes de fond, sur le fond de récipients thermoformés, de telle sorte que ces étiquettes apparaissent sous ces récipients, on utilise classiquement des procédés d'étiquetage en reprise, selon lesquels, après la fabrication des récipients, les étiquettes de fond sont collées à l'aide d'un dispositif d'étiquetage classique. C'est en particulier le cas lorsque les étiquettes de fond servent à identifier les récipients et les produits qu'ils contiennent, en particulier lorsqu'il s'agit d'étiquettes portant des codes-barres.

On connaît par ailleurs des récipients dont les fonds sont équipés de languettes détachables qui masquent un orifice de démoulage et doivent être séparées du fond pour libérer cet orifice et permettre le démoulage du produit contenu dans les récipients. Dans ce cas, ces languettes détachables sont disposées sur les fonds des récipients avant leur remplissage. En particulier, il est connu d'introduire des étiquettes dans les chambres de thermoformage, par le dessous de celles-ci, avant le thermoformage des récipients.

Toutefois, le fait de mettre en place les languettes par le fond des chambres de thermoformage nécessite de disposer d'un espace suffisant sous le bloc de moule et d'utiliser un bloc de moule ayant des chambres de thermoformage très particulières. Il en résulte d'importants problèmes d'encombrement, difficilement compatibles avec le thermoformage simultané, sur plusieurs rangées, de récipients ayant des étiquettes de fond. Ce système est également difficilement compatible avec la mise en place, en plus des étiquettes de fond, d'autres étiquettes sur la paroi des récipients.

Selon l'invention, pour mettre en place une étiquette de fond sur un récipient, on fait pivoter le bloc de moule autour d'un axe de basculement pour placer ledit bloc dans une première position basculée, on pousse l'étiquette de fond dans la chambre de thermoformage à travers le bord ouvert de cette chambre, jusqu'à amener ladite étiquette de fond contre le fond de la chambre alors que le bloc de moule est dans ladite première position basculée, puis on fait pivoter le bloc de moule autour de l'axe de basculement jusqu'à amener ce bloc en position de travail et on thermoforme un récipient dans la chambre.

Selon le procédé de l'invention, les étiquettes de fond sont donc introduites par le bord ouvert de la chambre de thermoformage, ce qui permet une introduction fiable, sans nécessiter un usinage particulier du fond de la chambre de thermoformage. On profite de ce que le bloc de moule est en position basculée, libérant ainsi le bord ouvert de la chambre de thermoformage pour l'introduction de bandelettes, pour procéder à cette introduction. En effet, si le thermoformage est réalisé en pas à pas dans un convoyeur de matériau thermoplastique, cette position basculée permet d'accéder au bord ouvert de la chambre de thermoformage sans être gêné par ce convoyeur.

EP 1 710 073 divulgue un procédé dans lequel des étiquettes, initialement présentes dans un magasin, sont saisies individuellement dans ce magasin par un conformateur, puis conformées par ce dernier en forme de bol, avant d'être introduites dans le moule en position basculée. Une portion des étiquettes ainsi conformées peut former une partie d'étiquette de fond. La nécessité de pré-découper les étiquettes, de les stocker et de les saisir puis de les conformer individuellement génère des coûts de production élevés.

L'invention a pour but d'améliorer l'état de la technique précité, en proposant un procédé simple et fiable pour mettre en place des étiquettes de fond sous le fond de récipient, avec des coûts de production modérés.

Ce but est atteint grâce au fait qu'on amène une bandelette à étiquettes en regard du bord ouvert de la chambre de thermoformage, dans un plan sensiblement parallèle au fond de ladite chambre, on découpe une étiquette de fond dans ladite bandelette et on pousse l'étiquette de fond découpée dans la chambre de thermoformage.

Avec ce procédé, on évite d'avoir à stocker des étiquettes prédécoupées pour former les étiquettes de fond. De plus, grâce à son positionnement dans le plan précité, la bandelette à étiquettes est parfaitement accessible pour découper l'étiquette, et la poussée de l'étiquette dans la chambre peut être réalisée perpendiculairement au plan dans lequel se trouve la bandelette, par une simple translation. L'équipement nécessaire est donc très simple.

Avantageusement, on découpe l'étiquette de fond à l'aide d'un couteau qui accompagne le déplacement d'un poussoir, sur au moins une partie de la course de ce dernier, et on pousse l'étiquette de fond dans la chambre à l'aide dudit poussoir.

Dans ce cas, par le déplacement du poussoir, on réalise la découpe de l'étiquette et sa poussée dans la chambre de thermoformage.

Avantageusement, on fournit un deuxième bloc de moule, analogue au premier bloc de moule et solidaire de ce dernier en pivotement autour de l'axe de basculement, et on place une étiquette de fond dans l'un des blocs de moule dans sa première position basculée, alors que l'autre bloc de moule est en position de travail.

Ceci permet de réaliser la mise en place de l'étiquette de fond dans l'un des blocs de moule en temps masqué par rapport au thermoformage de récipients dans l'autre bloc.

Selon une variante avantageuse, les décors comprennent, en outre, un décor latéral (par exemple une banderole ou une étiquette latérale) et, dans ce cas, on place en outre le premier bloc de moule dans une deuxième position basculée et on introduit ledit décor latéral dans la chambre de thermoformage alors que ledit bloc de moule est dans la deuxième position basculée.

Ainsi, grâce au procédé de l'invention, on peut non seulement mettre en place des étiquettes de fond, mais également des décors latéraux sur les récipients, dans le cadre général du procédé de thermoformage. Il n'est donc pas nécessaire de recourir à une opération de reprise, ni pour mettre en place les étiquettes de fond, ni pour mettre en place les décors latéraux.

Lorsque le décor latéral est du type d'une banderole, on peut utiliser, pour mettre en place le décor latéral, un procédé connu en soi, en profitant de ce que le bloc de moule est dans sa deuxième position basculée.

Actuellement, pour mettre en place de simples étiquettes latérales, c'est-à-dire d'étiquettes qui ne s'étendent pas sur l'intégralité du pourtour d'un récipient, de sorte qu'elles ne forment pas une ceinture pour ce récipient, on utilise plutôt des opérations d'étiquetage en reprise, après le thermoformage des récipients.

Un autre but de l'invention est toutefois de permettre la mise en place d'un décor latéral sous la forme d'une étiquette latérale non ceinturante, dans le cadre des opérations de thermoformage.

Dans ce but, lorsque le décor latéral est une étiquette latérale, pour mettre ladite étiquette latérale en place contre une paroi latérale de la chambre de thermoformage dudit au moins un bloc de moule, on dispose ladite étiquette sur un support, on introduit ce support dans ladite chambre à travers le bord ouvert de cette dernière, et on oriente ledit support vers la paroi latérale de la chambre.

Ainsi, lorsque le décor latéral est une étiquette latérale non ceinturante, ce décor peut être mis en place sur les récipients dans le cadre du procédé de fabrication des récipients, grâce aux étapes d'introduction du support dans la chambre à travers le bord ouvert de cette dernière et d'orientation de ce support vers la paroi latérale de la chambre.

Cette étape d'orientation permet de régler la position de l'étiquette latérale pour qu'elle soit mise en place dans une zone choisie de la paroi latérale de la chambre de thermoformage, de sorte qu'elle apparaisse sur la zone choisie de la paroi latérale du récipient une fois que celui-ci a été thermoformé.

Avantageusement, on fournit un troisième bloc de moule, analogue aux premier et deuxième blocs de moule et solidaire de ces derniers en pivotement autour de l'axe de basculement, on place respectivement lesdits blocs dans la position de travail, dans la première position basculée et dans la deuxième position basculée, et on dispose simultanément une étiquette de fond dans la chambre de thermoformage d'un bloc de moule dans la première position basculée et un décor latéral dans la chambre de thermoformage d'un autre bloc de moule dans la deuxième position basculée, alors que le troisième bloc de moule est dans sa position de travail.

Ceci permet de mettre en place l'étiquette de fond et le décor latéral en temps masqué par rapport au thermoformage des récipients, en utilisant les trois positions respectives des trois blocs de moule.

Avantageusement, on fournit au moins un premier et un deuxième bloc de moule ayant au moins une première et une deuxième chambre de thermoformage, lesdits blocs étant solidaires en pivotement autour de l'axe de basculement, on place l'un des blocs de moule en position de travail de thermoformage pour thermoformer des récipients dans les chambres de ce bloc, tandis que l'on place l'autre bloc de moule dans la première position basculée pour mettre en place une étiquette de fond dans la première chambre dudit autre bloc, puis on place ledit un des blocs de moule en position de travail de démoulage pour démouler les récipients thermoformés, tandis que l'on place ledit autre bloc dans la première position basculée pour mettre en place une étiquette de fond dans la deuxième chambre dudit autre bloc.

Ceci permet de mettre en place l'étiquette de fond dans plusieurs rangées d'un moule, en temps masqué par rapport au thermoformage de récipients dans la position de travail de thermoformage et, respectivement, en temps masqué par rapport au démoulage de récipients thermoformés. Bien entendu, il peut en aller de même pour la mise en place de décors latéraux.

L'invention concerne également un dispositif pour fabriquer des récipients par thermoformage et mettre en place sur ces récipients, des décors comprenant des étiquettes de fond, le dispositif comprenant au moins un premier bloc de moule qui comporte au moins une chambre de thermoformage ayant un bord ouvert et un fond, ledit bloc de moule étant apte à occuper une position de travail pour le thermoformage d'un récipient dans cette chambre.

Comme indiqué dans la partie introductive de la présente demande, pour mettre en place des étiquettes sur le fond de récipients thermoformés, on a couramment recours à un étiquetage, réalisé postérieurement au thermoformage, en reprise par rapport à ce dernier.

Par ailleurs, il existe des dispositifs de mise en place, sous le fond de récipient, de languettes décollables, pour démouler le contenu des récipients. Ces dispositifs permettent de mettre en place les languettes par le fond des chambres de thermoformage, celles-ci devant présenter une fente appropriée, les languettes devant nécessairement présenter une partie non collée sous le récipient, qui est séparée du reste de la languette par une découpe réalisée à l'extérieur de la chambre. S'agissant de languettes de démoulage, cette partie non collée présente l'avantage de former une patte de préhension. Toutefois, les dispositifs précités ne permettent pas la mise en place, sous le fond de récipients, d'étiquettes devant adhérer à ces fonds sur toutes leurs surfaces, par exemple des étiquettes d'identification telles que des étiquettes portant un code-barres.

Selon l'invention, le bloc de moule est monté pivotant autour d'un axe de basculement et est ainsi apte à occuper, en plus de ladite position de travail, une première position basculée, et que le dispositif comporte un poste d'étiquetage de fond ayant des moyens pour pousser une étiquette de fond dans la chambre de thermoformage à travers le bord ouvert de cette chambre alors que ledit bloc est en position basculée et pour amener ladite étiquette de fond contre le fond de la chambre.

Le dispositif de l'invention permet de mettre en place les étiquettes de fond à travers le bord ouvert de la chambre de thermoformage, alors que ce bord est accessible du fait du positionnement du bloc en position basculée. Il est alors aisé de guider l'étiquette pour l'amener correctement contre le fond de la chambre.

Comme indiqué précédemment, EP 1 710 073 utilise un tel positionnement en position basculée, mais présente certains inconvénients déjà évoqués.

L'invention a pour but d'améliorer l'état de la technique précitée, en proposant un dispositif permettant, de manière simple, fiable et peu coûteuse, de mettre en place des étiquettes de fond sous des récipients thermoformés.

Ce but est atteint grâce au fait que le poste de découpage comporte des moyens pour amener une bandelette à étiquettes en regard du bord ouvert de la chambre de thermoformage, dans un plan sensiblement parallèle au fond de ladite chambre, et des moyens pour découper une étiquette de fond dans ladite bandelette.

En découpant directement les étiquettes dans une bandelette juste avant leur mise en place dans le moule, on évite d'avoir à stocker des étiquettes pré-découpées pour former des étiquettes de fond, et à utiliser des préhenseurs complexes pour les saisir. De plus, le fait que, lors de la découpe, la bandelette soit sensiblement parallèle au fond de la chambre permet d'éviter des systèmes de renvoi complexes pour amener les étiquettes parallèlement au fond de la chambre.

Avantageusement, le poste d'étiquetage comprend un poussoir et un couteau apte à découper l'étiquette de fond dans la bandelette à étiquettes lors du déplacement de poussée dudit poussoir.

Du fait du positionnement particulier de la bandelette à étiquettes, sensiblement parallèlement au fond de la chambre, le poussoir peut être animé d'un simple mouvement de va-et-vient en translation, parallèle à l'axe de la chambre, c'est-à-dire perpendiculaire au plan précité.

Avantageusement, le dispositif comporte, en outre, un deuxième bloc de moule, analogue au premier bloc de moule et solidaire de ce dernier en pivotement autour de l'axe de basculement, et lesdits blocs de moule sont aptes à occuper simultanément la position de travail et la première position basculée, respectivement, pour permettre la mise en place d'une étiquette de fond dans la chambre de thermoformage de l'un desdits blocs de moule pendant le thermoformage d'un récipient dans la chambre de thermoformage de l'autre bloc de moule.

Il s'agit donc d'un dispositif permettant la mise en place d'étiquettes en temps masqué par rapport au thermoformage.

Avantageusement, le premier bloc de moule est apte à occuper, en outre, une deuxième position basculée et le dispositif comporte en outre un poste de mise en place d'un décor latéral pour mettre en place un décor latéral dans la chambre de thermoformage dudit bloc de moule, alors que ce dernier est dans ladite deuxième position basculée.

Ce poste de mise en place permet de mettre en place le décor latéral, dans la chambre, avant le thermoformage d'un récipient dans cette dernière. Ainsi, aussi bien l'étiquette de fond que le décor latéral sont mis en place dans la chambre avant le thermoformage d'un récipient, et des opérations d'étiquetage en reprise sont donc évitées.

Avantageusement, le poste de mise en place d'un décor latéral est un poste de mise en place d'étiquettes latérales et comprend des moyens pour pousser une étiquette latérale dans chambre de thermoformage à travers le bord ouvert de cette dernière et pour orienter ladite étiquette latérale contre une paroi latérale de ladite chambre.

Ce dispositif permet de mettre en place des étiquettes latérales non ceinturantes, grâce aux moyens qui poussent l'étiquette latérale dans la chambre et l'orientent contre une paroi latérale de cette chambre, dans la zone souhaitée.

Avantageusement, le poste de mise en place d'étiquettes latérales comprend un support d'étiquettes latérales apte à pénétrer dans la chambre de thermoformage et à être orienté vers la paroi latérale de la chambre, ce support étant avantageusement formé par la tête pivotante d'un poussoir.

Ce dispositif permet de mettre en place des étiquettes latérales, grâce aux moyens qui poussent l'étiquette latérale dans la chambre et l'orientent contre une paroi latérale de cette chambre, dans la zone souhaitée.

Avantageusement, le dispositif comporte, en outre, au moins un troisième bloc de moule, analogue aux premier et deuxième bloc de moule et solidaire de ces derniers en pivotement autour de l'axe de basculement, et lesdits blocs de moule sont aptes à occuper simultanément la position de travail, la première position basculée et la deuxième position basculée, respectivement, pour permettre la mise en place d'une étiquette de fond dans la chambre de thermoformage de l'un desdits blocs de moule occupant la première position basculée et la mise en place d'un décor latéral dans la chambre de thermoformage d'un autre desdits blocs de moule occupant la deuxième position basculée pendant le thermoformage d'un récipient dans la chambre de thermoformage du troisième bloc de moule occupant la position de travail.

Ce dispositif permet de réaliser l'étiquetage de fond, le décor latéral et le thermoformage en temps masqué.

Avantageusement, le dispositif comprend au moins un premier et un deuxième bloc de moule ayant au moins une première et une deuxième chambre de thermoformage, lesdits blocs étant solidaires en pivotement autour de l'axe de basculement et aptes à être déplacés simultanément en translation perpendiculairement audit axe, de telle sorte que la position de travail d'un bloc de moule comprend une position de travail de thermoformage dans laquelle un récipient peut être thermoformé dans la chambre de thermoformage dudit bloc et une position de travail de démoulage, dans laquelle le récipient thermoformé peut être démoulé, et le poste d'étiquetage de fond est apte à mettre en place une étiquette de fond dans la première chambre de thermoformage d'un bloc de moule pendant que l'autre bloc de moule est dans sa position de travail de thermoformage et à mettre en place une étiquette de fond dans la deuxième chambre de thermoformage dudit un bloc de moule pendant que ledit autre bloc est dans la position de travail de démoulage.

Ce dispositif permet de mettre en place des étiquettes de fond sur plusieurs rangées de chambres de thermoformage en temps masqué avec, respectivement, le thermoformage de récipients et le démoulage de récipients.

L'invention sera bien comprise et ses avantages apparaitront mieux à la lecture de la description détaillée qui suit, de modes de réalisation représentés à titre d'exemples non limitatifs.

La description se réfère aux dessins annexés sur lesquels :
- la figure 1 illustre schématiquement un dispositif de thermoformage de récipients, selon un premier mode de réalisation, dans une première position ;
- les figures 2, 3 et 4 montrent le dispositif de la figure 1, dans trois positions successives ;
- la figure 5 est une vue agrandie de la zone V de la figure 4 ;
- la figure 6 est une vue de la zone VI de la figure 2 ;
- la figure 7 est une vue d'un dispositif selon une variante, pour une position correspondant à celle de la figure 1 ;
- la figure 8 est une vue selon la flèche VIII de la figure 7 ;
- la figure 9 est une vue partielle selon la flèche IX de la figure 7 ;
- les figures 10A, 10B et 10C illustrent le fonctionnement de la partie du dispositif orienté à la figure 9, par des vues en perspective avec arrachement partiel ;
- les figures 11 à 14 montrent schématiquement un dispositif selon un autre mode de réalisation, dans quatre situations successives ;
- les figures 15A, 15B et 15C montrent le poste d'introduction d'étiquettes latérales du dispositif des figures 11 à 14, dans trois situations successives ; et
- les figures 16 et 17 illustrent deux situations successives d'un dispositif conforme à l'invention, selon une variante.

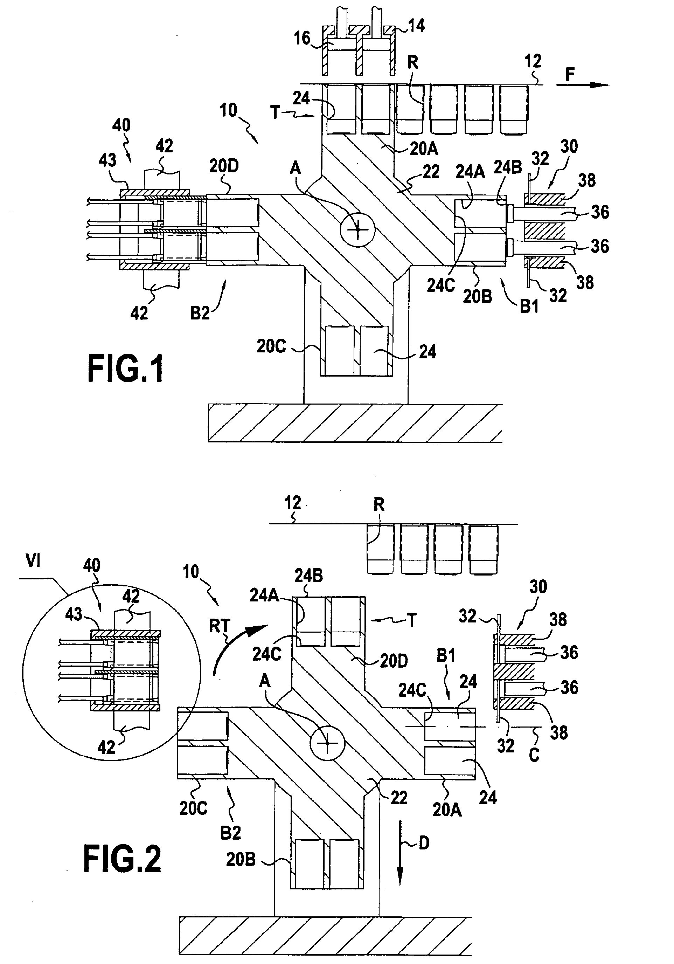

La figure 1 montre un dispositif 10 de fabrication de récipients par thermoformage de mise en place sur ces récipients de décors comprenant des étiquettes de fond et des banderoles latérales. Les récipients sont thermoformés dans une bande 12 en matériau thermoplastique entraînée en pas à pas dans le sens F.

De manière classique, le dispositif 10 fait partie d'une station de thermoformage d'une installation de fabrication de récipients, cette installation comprenant, de manière classique, un poste de chauffage de la bande thermoplastique situé en amont du dispositif 10 dans le sens F d'avancement de la bande et, situées en aval de ce dispositif dans le même sens, une station de remplissage de récipients, une station de fermeture de ces récipients par scellement et une station de découpe des récipients de la bande.

Bien que l'on ait représenté le thermoformage dans une bande de matériau thermoplastique 12, il va de soi que le dispositif est également applicable au thermoformage de récipients à partir de plaquettes ou jetons individuels ou correspondant à des groupes de récipients.

Le dispositif de la figure 1 comprend quatre blocs de moule, respectivement 20A, 20B, 20C et 20D. Ces blocs de moule sont solidaires d'un même bloc-support 22, montés rotatifs autour d'un axe de rotation A, perpendiculaire au plan de la figure 1. Ainsi, le bloc-support 22 est entraîné en rotation en pas à pas, en synchronisme avec l'avancement pas à pas de la bande thermoplastique 12.

Chaque bloc de moule comporte au moins une chambre de thermoformage 24 ayant une paroi latérale 24A, qui s'étend, à partir du bord ouvert 24B de la chambre, vers le fond 24C de cette dernière, opposée à son bord ouvert.

Par le pivotement du bloc-support 22, chaque bloc de moule est apte à adopter successivement les quatre positions représentées sur la figure 1 pour les quatre blocs de moule. Sur cette figure, le bloc 20A est dans la position de travail T, dans laquelle on voit que les récipients R sont thermoformés à partir de la bande 12. A cet effet, de manière classique, le dispositif comprend un contre-moule de thermoformage 14, disposé en regard du bloc de moule 20A et dans lequel sont montés coulissant des pistons de thermoformage 16, aptes à pénétrer dans les chambres de thermoformage 24 pour repousser dans cette dernière le matériau thermoplastique porté à la température suffisante par le poste de chauffage.

Sur la figure 1, le bloc de moule 20B occupe une première position basculée B1 permettant la mise en place, dans les chambres de thermoformage 24, d'étiquettes de fond devant être solidarisées avec le fond des récipients.

Le bloc 20D occupe quant à lui une deuxième position basculée B2 permettant la mise en place, dans ce bloc de moule, de décors latéraux formés en l'espèce par des banderoles latérales.

Entre les première et deuxième positions basculées B1 et B2, chaque bloc de moule peut occuper la position représentée pour le bloc 20C, puisque le bloc-support comporte en l'espèce quatre blocs de moule et que chaque pas de rotation couvre 90°.

On comprend que, lorsqu'un bloc de moule est dans sa première position basculée B1, on met en place dans ce dernier des étiquettes de fond puis, lorsqu'il occupe sa deuxième position basculée B2, on met en place les décors latéraux. Enfin, lorsque ce bloc arrive dans sa position de travail qui est celle du bloc 20A, on thermoforme les récipients dans les chambres de thermoformage préalablement équipées des étiquettes de fond et des décors latéraux, de sorte que ces étiquettes et ces décors adhèrent à la paroi des récipients thermoformés.

Ainsi, sur la figure 2, le bloc-support 22 a été déplacé vers le bas pour permettre le démoulage de récipients R préalablement formé dans le bloc de moule 20A, et a été pivoté d'un quart de tour dans le sens de rotation RT, de sorte que le bloc de moule 20A est parvenu dans la première position basculée B1.

Dans cette situation, le bloc de moule 20D est situé sous la bande de matériau thermoplastique 12 en ayant le bord ouvert 24B des chambres de thermoformage parallèle au plan de cette bande, qui est le plan de convoyage.

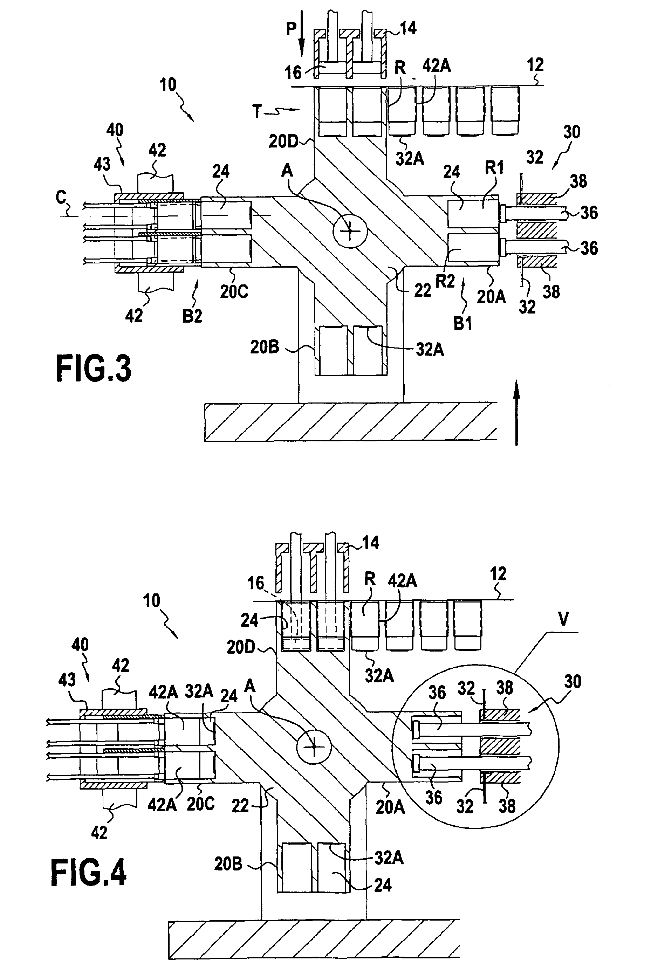

Sur la figure 3, le bloc-support 22 a été déplacé en translation vers le haut, de sorte que le bloc de moule 20D est parvenu dans sa position de travail de thermoformage, dans laquelle le bord des chambres est situé juste sous le plan de la bande de matériau thermoplastique 12, et l'on voit que des récipients sont sur le point d'être thermoformés par le déplacement des pistons de thermoformage vers le bas, permettant aux pistons de pénétrer dans les chambres.

Dans le même temps, le poste d'étiquetage de fond 30 est prêt à mettre en place des étiquettes de fond dans les chambres de thermoformage 24 du bloc de moule 20A qui est dans la première position basculée B1 et le poste de mise en place d'un décor latéral 40 est prêt à mettre en place des décors latéraux dans les chambres 24 du bloc de moule 20C, qui est dans la deuxième position basculée B2.

Sur la figure 4, les récipients R sont en train d'être thermoformés dans les chambres 24 du bloc de moule 20D et l'on voit que les pistons 16 sont dans les chambres 24 de ce bloc de moule, tandis que le poste d'étiquetage de fond 30 est en train de mettre en place des étiquettes de fond dans les chambres 24 du bloc de moule 20A, et que le poste 40 est en train de mettre en place des banderoles dans les chambres 24 du bloc de moule 20C.

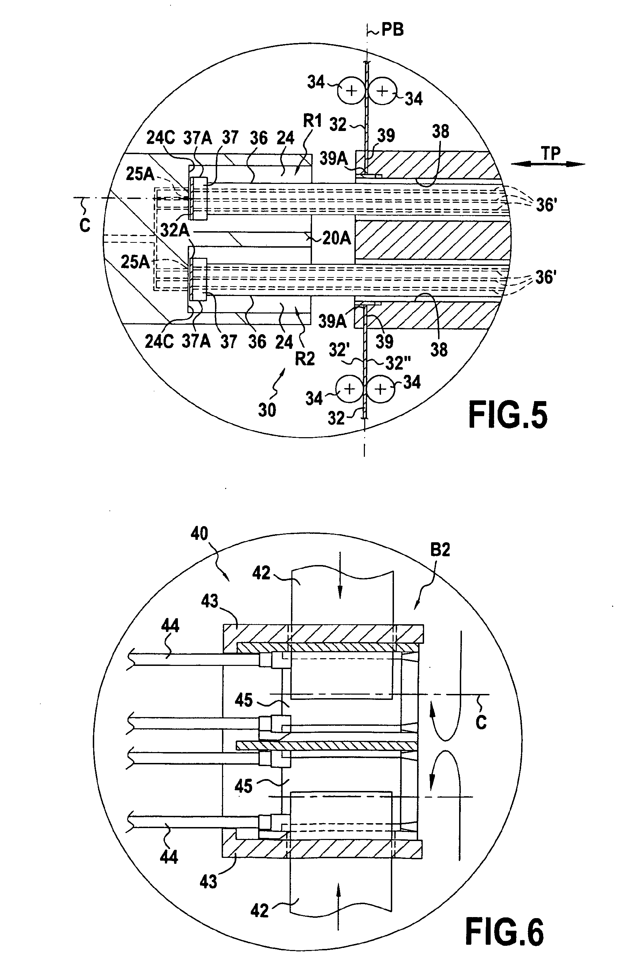

A l'aide de la figure 5, on décrit maintenant le poste d'étiquetage de fond 30.

Les étiquettes de fond sont découpées dans une bandelette à étiquettes 32 qui, dans la région du poste d'étiquetage 30, est orientée dans un plan PB sensiblement parallèle au fond 24C des chambres de thermoformage 24 d'un bloc de moule (en l'espèce le bloc 20A) qui se trouve dans la première positon basculée B1.

Pour amener la bandelette 32 dans ce plan, on utilise les moyens d'entraînement classique, par exemple des poulies de renvoi et des galets d'entraînement 34.

En l'espèce, le poste d'étiquetage permet de disposer simultanément des étiquettes de fond contre le fond de deux rangées de chambres de thermoformage 24 du bloc de moule. Pour simplifier, on ne décrira d'abord qu'un système permettant de mettre en place une étiquette dans une chambre.

On voit que le poste d'étiquetage comprend un poussoir 36 qui est mobile en translation en va-et-vient selon le sens indiqué par la double flèche TP de la figure 5. Le poussoir 36 est ainsi mobile entre une position de retrait, dans laquelle il est rétracté dans une chemise 38, comme on le voit sur la figure 2, et une position avancée à l'intérieur de la chambre de thermoformage, comme on le voit sur les figures 4 et 5. Dans cette position avancée, la tête 37 du poussoir vient pratiquement au contact du fond 24C de la chambre.

La paroi de la chemise 38 présente une fente 39 à travers laquelle l'extrémité de la bandelette 32 peut être introduite dans la chemise, alors que le poussoir est dans sa position rétractée visible sur la figure 2. Ainsi, l'extrémité de la bandelette est amenée dans la chemise 38, entre la tête 37 du poussoir et le fond de la chambre 24C.

Un couteau 37A, qui accompagne le poussoir 36 sur au moins une partie de la course de ce dernier vers le fond de la chambre 24C, découpe l'extrémité de la bandelette 32 pour former une étiquette 32A lors du déplacement du poussoir vers le fond de la chambre 24C. Le bord de la fente 39 situé sur la paroi interne de la chemise 38 présente un contre-couteau 39A. Lors de l'amenée de la bandelette dans le plan PB, elle est disposée contre ce contre-couteau 39A et il suffit donc d'un déplacement du poussoir perpendiculairement au plan PB, entraînant le couteau 37A avec lui, vers le fond de la chambre 24C, pour couper l'étiquette.

On voit sur la figure 5, que la portion de l'extrémité de la bandelette 32 a été découpée pour former une étiquette de fond 32A, qui est portée par la tête 37 du poussoir.

C'est la face externe 32' de la bandelette 32 qui est disposée contre le contre-couteau 39A, tandis que c'est la face interne 32" qui est plaquée contre la tête 37 du poussoir et contre le couteau 37A lors de la découpe. C'est la face interne 32" des étiquettes qui est plaquée contre les récipients lors du thermoformage. Le couteau 37 peut être formé par une arête du poussoir ou, comme dans l'exemple représenté, par une pièce distincte.

Le poussoir 36 présente une tête de poussée 37 qui est aspirante, pour plaquer l'étiquette 32A contre cette tête. On voit en effet que des canaux d'aspiration 36' sont ménagés dans le poussoir, et débouchent sur la tête 37.

De même, le fond 24C de la chambre de thermoformage comporte des orifices d'aspiration 25A qui, une fois que l'étiquette 32A est parvenue près de ce fond, permettent de plaquer cette étiquette contre le fond, en l'aspirant par sa face externe 32'. Bien entendu, les systèmes d'aspiration sont avantageusement cadencés et synchronisés avec les déplacements du moule et du poussoir pour que l'aspiration par les orifices 25A commence alors que l'aspiration par la tête 37 du poussoir 36 cesse.

La tête du poussoir peut présenter une forme sensiblement rectangulaire, et l'arête coupante du couteau 37A peut être disposée parallèlement à une arête de ce rectangle qui est parallèle à l'axe A de basculement du bloc de moule. Dans ce cas, le couteau coupe la bandelette 32 sur toute sa largeur, et l'étiquette 32A est constituée par un tronçon d'extrémité de la bandelette. On pourrait bien entendu prévoir que la tête du poussoir ait une autre forme, par exemple une forme sensiblement circulaire, et que le couteau ait une forme correspondante, avec une arête de découpe sur tout son pourtour, pour former une étiquette par une découpe à contour fermé. Dans ce cas, le contre-couteau 39A aurait également un contour fermé, et la fente 39 se prolongerait dans la paroi opposée de la chemise 38, pour la récupération des déchets de bandelettes d'étiquettes de fond.

Le déplacement du poussoir 36 est opéré selon l'axe C d'une chambre de thermoformage, qui est perpendiculaire au fond 24C de cette chambre et correspond à l'axe selon lequel se déplacent les pistons de thermoformage 16 lorsque le bloc de moule comportant cette chambre est en position de travail.

Dans l'exemple représenté, le dispositif permet de disposer simultanément des étiquettes de fond dans deux rangées de chambres de thermoformage qui sont adjacentes et sont disposées l'une à la suite de l'autre dans une direction D perpendiculaire à l'axe de basculement A. En l'espèce, cette direction est également celle dans laquelle se déplace le bloc-support 22 entre la position de thermoformage (figure 1) et la position de démoulage (figure 2).

Ainsi, pour la série de chambres de la première rangée R1, des bandelettes 32 (une par chambre) arrivent par le dessus des chemises 38 des pistons 36 correspondant à cette première série de chambres, tandis que, pour mettre en place des bandelettes dans chacune des chambres de la deuxième rangée R2, des bandelettes 32 arrivent par le dessous de la chemise 38 de chacun des pistons 36 correspondant à cette deuxième série.

Bien entendu, chaque rangée d'ensembles piston/chemise comporte autant de tels ensemble que chaque rangée de chambres de thermoformage comporte de chambres.

Le dispositif représenté sur les figures 1 à 4 permet également de mettre en place des décors latéraux dans les chambres 24. Ainsi, ce dispositif comprend un poste de mise en place d'un décor latéral 40. En l'espèce, ce décor latéral est réalisé sous la forme d'un banderolage, et le poste 40 est donc un poste de banderolage. Il comporte, de manière connue en soi, des moyens d'amenée de bandelettes 42 dans des chambres de banderolage 43, dans lesquelles les portions d'extrémité de ces bandelettes sont enroulées autour d'un axe parallèle à l'axe C des chambres 24 lorsque le bloc de moule comprenant ces chambres est dans la deuxième position basculée B2. Le poste de banderolage comporte, de manière connue en soi, les moyens de découpe de la partie de l'extrémité de la bandelette pour séparer la portion enroulée dans la chambre de banderolage 43 du reste de la bandelette et des moyens de transfert de cette portion enroulée dans une chambre de thermoformage. En l'espèce, ces moyens de transfert comportent des doigts 44 qui, lors de l'enroulement, sont dans une position de retrait, comme représenté sur les figures 1, 2, 3 et 6 et qui peuvent avancer vers la chambre de thermoformage 24 pour pousser la banderole enroulée dans cette chambre, comme représenté sur la figure 4.

Avantageusement, le poste de banderolage comprend, en outre, un conformateur 45 formant un noyau qui, pour l'enroulement de la bandelette, est disposé à l'intérieur de la chambre 43, de manière à délimiter, avec la paroi interne de cette chambre, une fente annulaire dans laquelle s'enroule la banderole. Pour la mise en place de la banderole dans une chambre de thermoformage, le noyau peut avancer sensiblement jusqu'au bord de la chambre, entraînant avec lui les doigts 44 dans son mouvement d'avancement, puis ces doigts continuent seuls leur avancée pour pousser la banderole dans la chambre, jusqu'à ce que cette banderole parvienne dans la position représentée, pour les chambres du bloc de moule 20C, sur la figure 4.

Avantageusement, la paroi latérale de chaque chambre de thermoformage comporte des moyens d'aspiration, permettant de maintenir en place la banderole 42A enroulée contre la paroi latérale de la chambre de thermoformage 24.

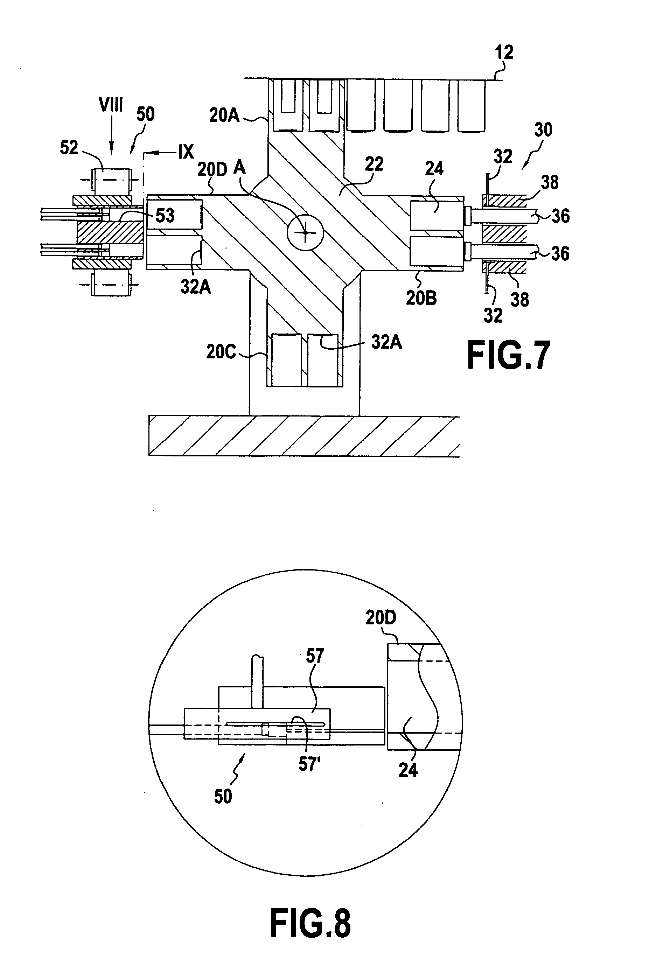

On décrit maintenant le dispositif de la figure 7, qui se distingue de celui de la figure 1 seulement par le poste de mise en place de décor latéral. En effet, avec le dispositif de la figure 7, le décor latéral n'est pas formé par une banderole ceinturante, mais seulement par une étiquette latérale qui s'étend sur une partie seulement du pourtour des récipients. Ainsi, sur la figure 7, les mêmes références numériques sont utilisées que sur les figures 1 à 6, sauf en ce qui concerne le poste de mise en place de décor latéral.

Dans ce poste 50, pour mettre en place une étiquette latérale contre la paroi latérale de la chambre de thermoformage d'un bloc de moule, on amène une bandelette 52 dans une chambre d'étiquetage 53. A son arrivée en contact avec la paroi de la chambre 53, la bandelette est orientée dans un plan sensiblement perpendiculaire à l'axe A de basculement du bloc de moule. Une étiquette latérale est alors formée dans cette chambre 53, puis elle est poussée dans une chambre de thermoformage 24 à travers le bord ouvert 24B de cette dernière, et disposée contre la paroi latérale 24A de cette chambre.

Plus précisément, comme on le voit sur les figures 8, 9, 10A, 10B et 10C, l'étiquette latérale est formée par une partie d'extrémité 52A de la bandelette à étiquettes latérales 52. Le poste 50 comprend, en outre, un couteau 57 qui est mobile entre une position dans laquelle il permet l'introduction de l'extrémité de la bandelette dans la chambre d'étiquetage et une position dans laquelle il est déplacé perpendiculairement à cette bandelette pour la découper au ras de la paroi de cette chambre.

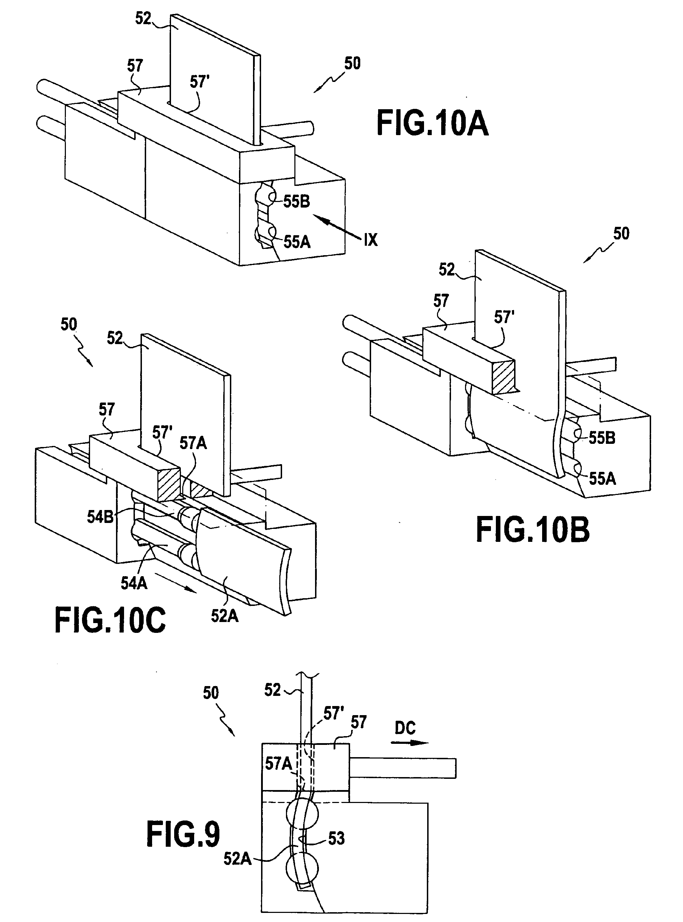

En l'espèce, le couteau 57 comporte une fente traversante 57' qui est peut être placée en registre avec l'ouverture de la chambre 53, comme sur les figures 9, 10A, 10B et 10C et qui, par un déplacement DC du couteau, peut être décalée par rapport à cette fente comme le montre la figure 8, pour que l'arête de découpe 57A (voir arrachement des figures 10B et 10C) coupe la bandelette 52.

Comme on le voit notamment sur la figure 9, la chambre d'étiquetage 53 a la forme d'une fente adaptée à la courbure de la zone de la paroi latérale de la chambre 24 sur laquelle on souhaite disposer l'étiquette latérale. Ainsi, cette fente peut être pratiquement rectiligne ou, au contraire une forme légèrement courbe, comme le montre la figure 9.

Le poste d'étiquetage latéral 50 comporte des moyens de transfert d'une étiquette latérale dans une chambre de thermoformage. En l'espèce, ces moyens de transfert sont formés par deux doigts de transfert 54A et 54B qui sont mobiles entre une position de retrait qu'ils occupent en particulier sur les figures 8, 9 et 10B, dans laquelle ils permettent à l'étiquette latérale 52A d'occuper la chambre d'étiquetage 53, et une position avancée vers la chambre de thermoformage 24, dans laquelle ils traversent la chambre d'étiquetage 53 pour pousser l'étiquette 52A dans la chambre de thermoformage. Bien entendu, la forme de la chambre d'étiquetage permet le passage de ces doigts et l'on voit donc que cette chambre comporte, de manière localisée, des agrandissements de sa section 55A et 55B adaptés à la section des doigts 54A et 54B.

En variante, la chambre d'étiquetage 53 peut être formée entre deux mâchoires d'un conformateur, ces mâchoires pouvant être ouvertes pour permettre la mise en place d'une étiquette sur l'une d'entre elles, puis refermées pour délimiter entre elles la chambre d'étiquetage. De plus, l'ensemble formé par les deux mâchoires peut être pivotant pour que, dans la position ouverte, la mâchoire devant recevoir l'étiquette soit orientée de manière à faciliter le dépôt de l'extrémité de la bandelette à étiquettes sur cette mâchoire (par exemple en plaçant cette mâchoire horizontalement). Après la fermeture des mâchoires et la découpe de l'extrémité de la languette pour former une étiquette, l'ensemble des deux mâchoires refermées est ensuite orienté pour que la chambre d'étiquetage soit orientée parallèlement à la zone de la paroi latérale de la chambre de thermoformage qui est destinée à recevoir l'étiquette.

De même, les étiquettes peuvent être prédécoupées et être dépilées à partir d'une chambre de stockage pour leur mise en place dans la chambre d'étiquetage.

Comme le poste d'étiquetage de fond, le poste d'étiquetage latéral permet la mise en place simultanée d'étiquettes dans les chambres de thermoformage réparties sur deux rangées. En conséquence, une bandelette à étiquettes latérales 52 arrive de part et d'autre d'un module d'étiquetage comprenant deux rangées de chambres d'étiquetage 53 du type précédemment décrit.

Pour maintenir l'étiquette latérale en place dans la zone choisie d'une chambre de thermoformage, cette zone comprend avantageusement des orifices d'aspiration. Pour favoriser la mise en place de l'étiquette latérale dans la chambre, l'aspiration est de préférence réalisée pour débuter au plus tard dès que le bord menant de l'étiquette latérale (opposé aux doigts 54A, 54B) pénètre dans la chambre 24.

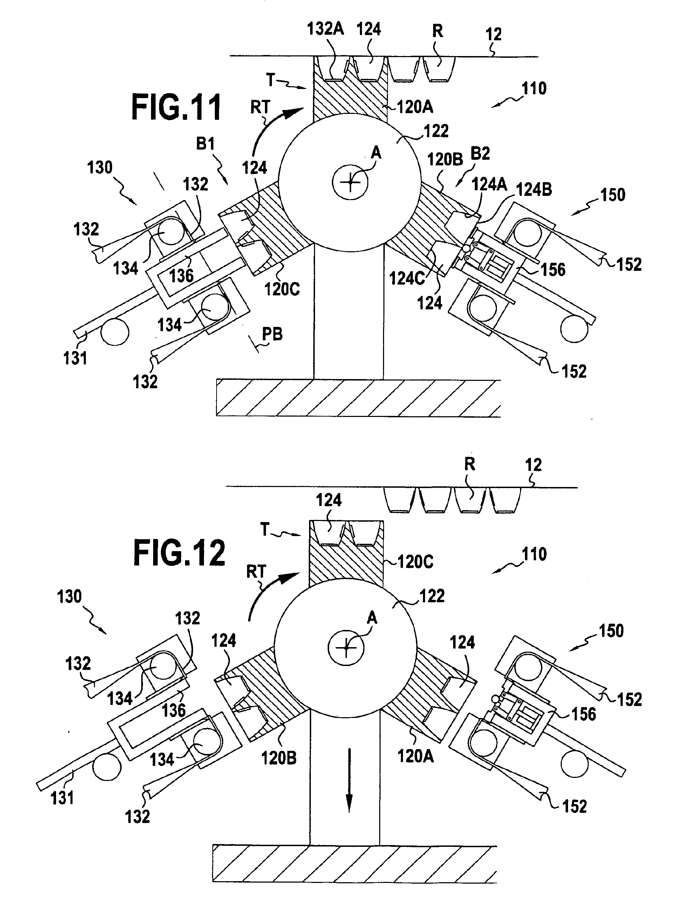

On décrit maintenant les figures 11 à 14, qui montrent un autre mode de réalisation du dispositif de l'invention.

Comme celui des précédentes figures, ce dispositif permet la mise en place d'étiquettes de fond et également d'étiquettes latérales dans des chambres de thermoformage avant le thermoformage de récipients dans ces chambres, car il comporte un poste d'étiquetage de fond 130 et un poste d'étiquetage latéral 150.

En l'espèce, ce dispositif 110 comprend trois blocs de moule, respectivement 120A, 120B et 120C. Sur la figure 11, le bloc 120A occupe une position de travail T, tandis que le bloc 120C occupe une première position basculée B1 permettant la mise en place d'étiquette de fond dans les chambres 124 de thermoformage, et que le bloc 120B occupe une deuxième position basculée B2 pour la mise en place d'étiquettes latérales dans ces chambres 124. Les blocs de moule 120A, 120B et 120C sont analogues entre eux, et leurs chambres de thermoformage 124 présentent chacune une paroi latérale 124A s'étendant entre leur bord ouvert 124B et leur fond 124C opposé à ce bord ouvert.

Le poste d'étiquetage de fond 130 est globalement analogue au poste 30 précédemment décrit. Il comporte en effet des moyens 134 pour amener une bandelette d'étiquettes de fond 132 en regard du bord ouvert 124A des chambres de thermoformage du bloc de moule dans sa première position basculée B1 et un poussoir 136 pour découper une étiquette 132A à l'extrémité de la bandelette 132 et pousser cette étiquette contre le fond 124C dans la chambre de thermoformage 124. Comme précédemment, on met en place simultanément des étiquettes de fond dans deux rangées de chambre de thermoformage, et le poste d'étiquetage de fond comporte en fait deux rangées de poussoirs 136 qui sont portés par une tige de support 131 entraînée en va-et-vient, par exemple à l'aide d'un système de pignon et de crémaillère.

Le poste 130 peut être analogue au poste 30 en ce qui concerne la conformation des couteaux de découpe de l'étiquette, et celle de la tête de poussée des poussoirs, et notamment leur caractère aspirant.

On voit que le dispositif 110 des figures 11 à 14 a une séquence de fonctionnement analogue à celle du dispositif des figures précédentes. Sur la figure 11, le bloc de moule 120A est dans la position de travail T, et des récipients peuvent être thermoformés dans les chambres 124 de ce bloc de moule, tandis que le bloc de moule 120B est dans la deuxième position basculée B2 pour permettre la mise en place dans les chambres 124 d'étiquettes latérales et que le troisième bloc de moule 120C est dans sa première position basculée B1 pour permettre la mise en place d'étiquettes de fond dans les chambres 124 de ce bloc de moule. Sur la figure 12, des récipients R ont été thermoformés dans les chambres de thermoformage 124 du bloc de moule 120A, le bloc-support 122 des blocs de moule a été déplacé vers le bas pour permettre le démoulage des récipients et l'avancement de la bande de matériau thermoplastique 12, et ce bloc-support a été pivoté d'un cran dans le sens de rotation RT autour de l'axe de basculement A, pour amener le bloc 120A dans la région du poste de mise en place d'étiquettes latérales, le bloc 120B dans la région du poste de mise en place d'étiquettes de fond et le poste 120C sous la bande 12.

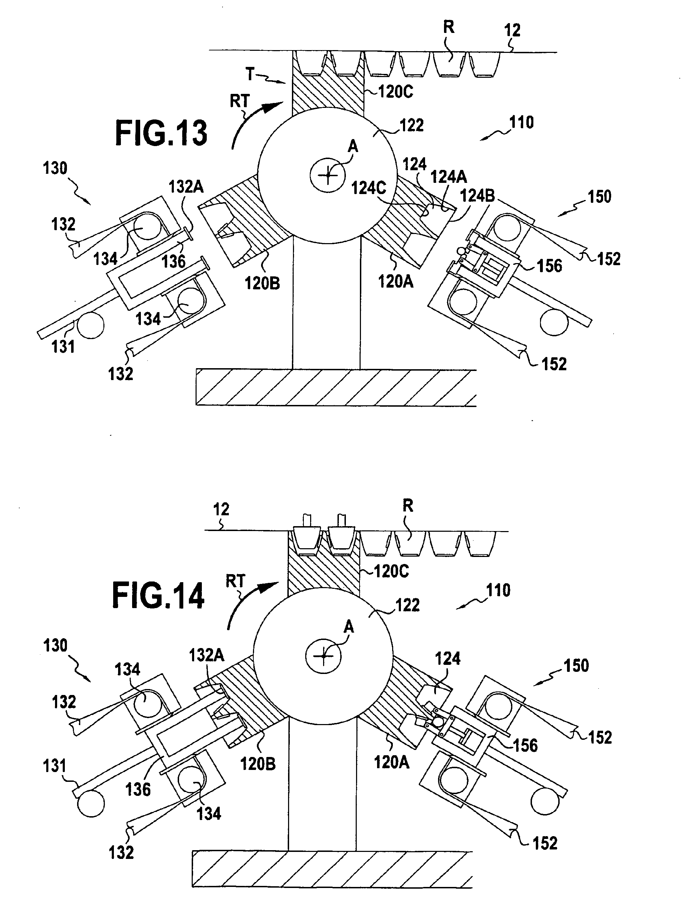

Sur la figure 13, le bloc-support 122 a été ramené vers le haut, de sorte que le bloc de moule 120C est en position de travail de thermoformage, dans laquelle des récipients peuvent être thermoformés dans les chambres de ce bloc.

Les blocs 120A et 120B sont toujours respectivement dans la région des postes 150 et 130 mais sont cette fois dans des positions permettant la mise en place des étiquettes, respectivement, d'étiquettes latérales et d'étiquettes de fond. Sur la figure 14, des récipients sont en cours de thermoformage dans les chambres du bloc de moule 120C, des étiquettes latérales sont en cours de mise en place dans les chambres du bloc de moule 120A, et des étiquettes de fond sont en cours de mise en place dans les chambres du bloc de moule 120B.

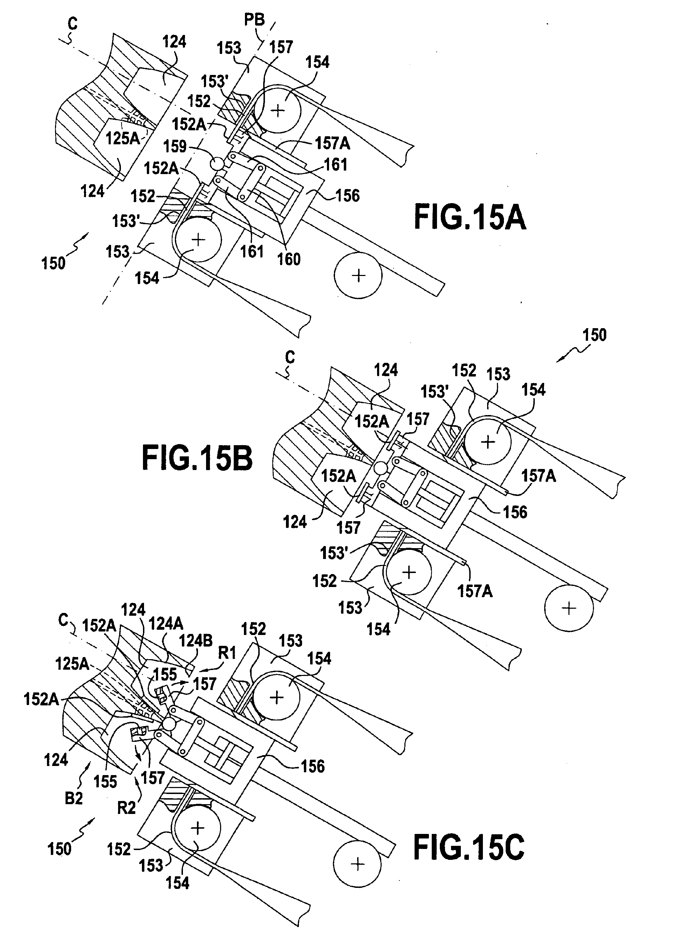

En référence aux figures 15A, 15B et 15C, on décrit maintenant la mise en place des étiquettes latérales dans les chambres d'un bloc de moule, à l'aide du poste d'étiquetage latéral 150.

Ce poste 150 comprend des moyens pour pousser une étiquette latérale dans la chambre de thermoformage 124 à travers son bord ouvert 124B et pour orienter l'étiquette latérale contre la paroi latérale 124A de cette chambre.

Le système représenté sur les figures 15A à 15C permet de mettre en place simultanément deux étiquettes sur les parois adjacentes de deux chambres différentes. En effet, le bloc de moule comprenant au moins deux chambres de thermoformage (deux rangées de chambres, en l'espèce), le poste de mise en place d'étiquettes latérales comprend deux supports d'étiquettes aptes à être ramenés l'un vers l'autre pour disposer une étiquette dans chacune desdites chambres.

Toutefois, dans un premier temps, on s'intéresse à la mise en place d'une étiquette.

Pour mettre en place une étiquette, une bandelette à étiquettes latérales 152 est amenée dans le poste de mise en place d'étiquettes latérales 150, de telle sorte que cette bandelette soit disposée dans un plan sensiblement parallèle au bord ouvert 124B de la chambre de thermoformage 124, c'est-à-dire sensiblement perpendiculaire à l'axe C de la chambre de thermoformage alors que le bloc de moule est dans sa deuxième position basculée B2. Il est à noter que ce plan d'amenée des bandelettes PB est en outre parallèle à l'axe de pivotement A du bloc-support.

Pour amener la bandelette 152 dans ce plan, des moyens d'amenée de type connu en soi, utilisant notamment des poulies de renvoi 154, sont utilisés.

La partie d'extrémité de la bandelette est ainsi amenée dans une fente de guidage 153' d'une pièce de support 153. Sur la figure 15A, un poussoir 156 est en position de retrait par rapport au bord de la fente 153', de sorte que la portion d'extrémité libre 152A de la bandelette 152 peut être disposée contre la tête 157 de ce poussoir.

Lorsque le poussoir 156 est dans sa position de retrait, un couteau 157A est également en retrait. On voit sur la figure 15B que le poussoir 156 a avancé vers la chambre de thermoformage 124 et que, dans le même temps, le couteau 157 s'est également déplacé vers cette chambre. Lors de ce déplacement, ce couteau est parvenu en travers de l'ouverture de la fente 153', et a donc découpé la bandelette contre le contre-couteau formé par un bord de cette fente tourné du côté de la chambre 124. Ainsi, la portion d'extrémité de la bandelette découpée forme une étiquette latérale qui est portée par la tête 157 du poussoir 156.

Le couteau 157A pourrait être directement formé par un bord du poussoir, mais il est avantageusement constitué par une pièce distincte, qui accompagne le mouvement du poussoir seulement sur une partie de sa course.

Sur la figure 15B, la tête du poussoir 157 portant l'étiquette latérale est parvenue pratiquement jusqu'au bord 124B de la chambre de thermoformage. A partir de cette situation, cette tête pivote pour orienter l'étiquette latérale 152A qu'elle porte contre la paroi latérale 124A de la chambre de thermoformage. Sur la figure 15C, l'étiquette latérale 152A vient ainsi d'être placée contre ladite paroi latérale, et la tête pivotante 157 est en train de revenir vers le poussoir par un mouvement de pivotement inverse à celui qui vient d'être décrit.

Avantageusement, comme on le voit sur les figures 15A à 15C, la paroi latérale 124A de la chambre présente des orifices d'aspiration 125A qui permettent de plaquer l'étiquette latérale contre cette paroi.

De même, il est avantageux que la tête pivotante 157 précédemment décrite présente de tels orifices d'aspiration 155 tels qu'amorcés en traits interrompus et visibles dans l'arrachement de la figure 15C. Il est en effet avantageux que le support (en l'espèce la tête 157) des étiquettes qui les met en place contre une paroi latérale d'une chambre de thermoformage comporte une surface de support aspirante pour éviter tout risque d'échappement des étiquettes lors de cette mise en place. Bien entendu, les systèmes d'aspiration de ce support et de la chambre peuvent être synchronisés pour que celui de la chambre prenne le relais de celui du support.

Le poste de mise en place d'étiquettes latérales représenté sur les figures 15A à 15C permet la mise en place simultanément d'étiquettes latérales sur des parois adjacentes de deux chambres de thermoformage appartenant respectivement à deux rangées, R1 et R2 de chambres situées l'une à la suite de l'autre dans une direction perpendiculaire à l'axe C des chambres.

Pour ce faire, le poussoir 156 est double, chaque branche de poussoir étant disposée en regard du fond de l'une des chambres considérées. De même, la tête de poussoir 157 est également double, et dans l'espèce formée par deux mâchoires d'une pince articulées autour d'un axe 159. Ces mâchoires sont reliées à la tête d'un piston 160 par des biellettes 161. Sur la figure 15A, le poussoir double est en position de retrait, et il en va de même de la tête du piston 160. En conséquence, les têtes articulées 157 reposent sur les extrémités des branches du poussoir. Dans un premier temps, lors de la découpe des étiquettes latérales à partir des bandelettes 152 et de la poussée des étiquettes découpées vers les chambres, le piston 160 est solidaire du déplacement en translation des poussoirs, sans se déplacer par rapport à ces derniers. On parvient ainsi dans la situation représentée à la figure 15B. Ensuite, pour orienter les étiquettes latérales 152A vers les parois des chambres 124, le piston 160 est déplacé vers le fond de ces chambres, ce qui provoque l'actionnement des biellettes 161 et, donc, le pivotement des têtes 157 autour de l'axe de pivotement 159, jusqu'à les rapprocher des deux parois adjacentes des chambres 124.

Le piston 160 peut être déplacé par tout moyen approprié, mécanique ou à air comprimé.

Il va de soi que le dispositif représenté sur les figures 11 à 14 pourrait, à l'instar à celui des figures précédentes, comporter quatre blocs de moule. En l'espèce, il est toutefois avantageux de n'en prévoir que trois, avec des pas de rotation angulaire de 120°, pour des raisons d'encombrement liées, en particulier, à la mise en place des étiquettes latérales nécessitant l'orientation de ces étiquettes contre la paroi latérale des chambres de thermoformage.

Par ailleurs, dans le sens de rotation RT du bloc-support, chaque bloc de moule passe successivement, à partir de sa position de travail, par sa deuxième position basculée puis par sa première position basculée. Une séquence inverse pourrait bien entendu être utilisée.

Les dispositifs qui viennent d'être décrit permettent, en temps masqué par rapport au thermoformage de récipients, de mettre en place des étiquettes de fond et des étiquettes latérales dans les chambres de thermoformage.

Toutefois, pour réaliser ce travail en temps masqué, les exemples qui viennent d'être décrit n'utilisent que le temps de thermoformage de récipients, alors que le bloc de moule qui est en position de travail est dans sa position de travail de thermoformage, c'est-à-dire contre le contre-outil de thermoformage.

A cet égard, il convient de signaler que si un thermoformage vers le bas est représenté, on pourrait bien entendu appliquer l'invention à un thermoformage vers le haut, auquel cas le démoulage serait réalisé par un déplacement vers le haut du bloc de moule, qui serait situé au-dessus de la bande thermoplastique.

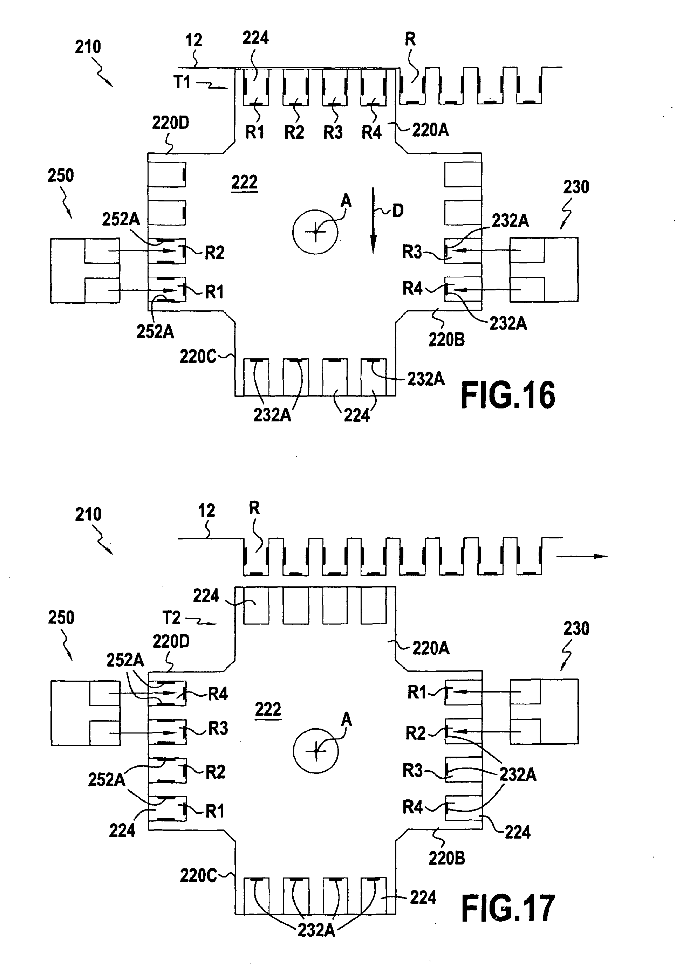

On décrit maintenant, en référence aux figures 16 à 17, un dispositif et un procédé qui permettent de faire le travail en temps masqué, pour partie pendant le thermoformage et pour partie pendant le démoulage.

Le dispositif représenté sur les figures 16 et 17 comporte quatre blocs de moule, respectivement 220A, 220B, 220C et 220D. Ces blocs sont solidaires d'un bloc-support 222 qui est apte à pivoter séquentiellement autour d'un axe de basculement A. Les blocs de moule peuvent être analogues aux blocs de moule précédemment décrits.

Sur la figure 16, le bloc de moule 220A est dans sa position de travail de thermoformage T1, dans laquelle il est situé au droit de la bande thermoplastique 12 et sensiblement contre cette dernière, de manière à permettre le thermoformage de récipients dans cette bande, dans les chambres 224 de ce bloc de moule. Sur la figure 17, le bloc-support 222 a été déplacé vers le bas perpendiculairement au plan de la bande 12, pour faire échapper des récipients R venant d'être thermoformés aux chambres 224 du bloc de moule 220A. En d'autres termes, le bloc de moule 220A est alors dans sa position de travail de démoulage T2. On profite des positions T1 et T2 qui viennent d'être décrites pour mettre en place des étiquettes de fond et des étiquettes latérales dans toutes les chambres. En effet, en l'espèce, chaque bloc de moule comprend quatre rangées de chambres de thermoformage, respectivement R1, R2, R3 et R4, qui sont situées les unes à la suite des autres dans la direction D de déplacement de démoulage du moule. Le poste de mise en place d'étiquettes de fond 230, de même que le poste de mise en place de décor latéral 250 sont fixes vis-à-vis du déplacement D. Toutefois, l'amplitude de ce déplacement de démoulage est réglée de telle sorte que, lorsque le bloc de moule 220A est dans sa position de travail de thermoformage T1, les chambres de thermoformage des rangées R3 et R4 du bloc de moule 220B se trouvent en regard du poste de mise en place d'étiquettes de fond, de sorte que des étiquettes de fond 232A peuvent alors être mises en place dans les chambres de ces rangées et que, dans le même temps, les rangées R1 et R2 de chambres du bloc de moule 220B se trouvent en regard du poste de mise en place d'étiquettes latérales 250, de sorte que des décors latéraux (étiquettes non ceinturantes ou banderoles) 252A peuvent alors être mises en place dans les chambres de ces deux rangées.

Le réglage de la course de démoulage est tel que, lorsque le bloc-support 222 est déplacé pour que le bloc 220 soit dans sa position de travail de démoulage T2, ce sont cette fois les chambres des rangées R1 et R2 du bloc de moule 220B qui se trouvent en regard du poste 230 pour permettre la mise en place d'étiquettes de fond 232A dans les chambres de ces rangées et les chambres des rangées R3 et R4 du bloc de moule 220D qui se trouvent en regard du poste 250 pour permettre la mise en place d'étiquettes latérales dans les chambres de ces rangées.

Le travail en temps masqué qui vient d'être décrit en référence aux figures 16 et 17 est particulièrement intéressant pour des blocs de moule comportant des chambres de thermoformage réparties sur quatre rangées puisque, pour chaque paire de rangées, les bandelettes à partir desquelles sont formées les étiquettes peuvent être amenées, respectivement par le haut et par le bas des postes 230 et 250.

Bien que ce système ait été décrit en relation avec un dispositif comportant quatre blocs de moule décalés angulairement de 90°, il est bien entendu transposable à un dispositif conforme à celui des figures 11 à 14, comprenant seulement trois blocs de moule, ce qui nécessiterait seulement de régler en conséquence la course de déplacement des pistons de mise en place des étiquettes et/ou, dans l'une des positions, de rapprocher les postes 130 et 150 des blocs de moule dans les positions B1 et B2.

## Revendications

1. Procédé de fabrication de récipients (R) par thermoformage et de mise en place sur ces récipients, de décors comprenant des étiquettes de fond (32A, 132A, 232A), dans lequel on fournit au moins un premier bloc de moule (20A, 120A, 220A) qui comporte au moins une chambre de thermoformage (24, 124, 224) ayant un bord ouvert (24B, 124B) et un fond (24C, 124C), et on thermoforme un récipient (R) dans cette chambre alors que ledit bloc de moule est en position de travail (T, T1), dans lequel pour mettre en place une étiquette de fond (32A, 132A, 232A) sur un récipient (R), on fait pivoter le bloc de moule (20A, 120A, 220A) autour d'un axe de basculement (A) pour placer ledit bloc dans une première position basculée (B1), on pousse l'étiquette de fond (32A, 132A, 232A) dans la chambre de thermoformage (24, 124, 224) à travers le bord ouvert (24B, 124B) de cette chambre, jusqu'à amener ladite étiquette de fond (32A, 132A, 232A) contre le fond (24C, 124C) de la chambre (24, 124, 224) alors que le bloc de moule (20A, 120A, 220A) est dans ladite première position basculée (B1), puis on fait pivoter le bloc de moule autour de l'axe de basculement jusqu'à amener ce bloc en position de travail (T) et on thermoforme un récipient (R) dans la chambre (24, 124, 224),
**caractérisé en ce qu'**on amène une bandelette à étiquettes (32, 132) en regard du bord ouvert (24B, 124B) de la chambre de thermoformage (24, 124), dans un plan (PB) sensiblement parallèle au fond (24C, 124C) de ladite chambre, on découpe une étiquette de fond (32A, 132A) dans ladite bandelette (32, 132) et on pousse l'étiquette de fond découpée dans la chambre de thermoformage (24, 124).

2. Procédé selon la revendication 1, **caractérisé en ce qu'**on découpe l'étiquette de fond (32A, 132A) à l'aide d'un couteau (37A) qui accompagne le déplacement d'un poussoir (36, 136) sur au moins une partie de la course de ce dernier, et on pousse l'étiquette de fond dans la chambre (24, 124) à l'aide dudit poussoir (36, 136).

3. Procédé selon la revendication 1 ou 2, **caractérisé en ce que**, pour découper l'étiquette de fond (32A, 132A), on amène la bandelette (32, 132) dans ledit plan (PB) sensiblement parallèle au fond (24C, 124C) de la chambre (24, 124) en disposant la bandelette contre un contre-couteau (39A).

4. Procédé selon les revendications 2 et 3, **caractérisé en ce qu'**on dispose contre le contre-couteau (39A) une face externe (32') de la bandelette (32), opposée au poussoir (36).

5. Procédé selon l'une quelconque des revendications 1 à 4, **caractérisé en ce qu'**on pousse l'étiquette de fond (32A, 132A, 232A) dans la chambre à l'aide d'un poussoir (36, 136) tout en plaquant ladite étiquette contre ledit poussoir par aspiration.

6. Procédé selon l'une quelconque des revendications 1 à 5, **caractérisé en ce qu'**on fournit un deuxième bloc de moule (20B, 120B, 220B), analogue au premier bloc de moule (20A, 120A, 220A) et solidaire de ce dernier en pivotement autour de l'axe de basculement (A), et on place une étiquette de fond (32A, 132A, 232A) dans la chambre de thermoformage (24, 124, 224) de l'un (20B, 120C, 220B) des blocs de moule dans sa première position basculée (B1), alors que l'autre bloc de moule (20A, 120A, 220A) est en position de travail (T, T1).

7. Procédé selon l'une quelconque des revendications 1 à 6, **caractérisé en ce que** les décors comprennent, en outre, un décor latéral (42A, 52A, 152A, 252A) et **en ce qu'**on place en outre le premier bloc de moule (20A, 120A, 220A) dans une deuxième position basculée (B2), et on introduit ledit décor latéral dans la chambre de thermoformage (24, 124, 224) alors que ledit bloc de moule est dans la deuxième position basculée (B2).

8. Procédé selon la revendication 7, **caractérisé en ce que** le décor latéral est une banderole (42A) ou une étiquette latérale (52A, 152A).

9. Procédé selon la revendication 7, **caractérisé en ce que** le décor latéral est une étiquette latérale (52A, 152A) et **en ce que** pour mettre ladite étiquette latérale en place contre une paroi latérale (24A, 124A) de la chambre de thermoformage (24, 124) dudit au moins un bloc de moule, on dispose ladite étiquette sur un support (157), on introduit ce support dans ladite chambre à travers le bord ouvert (24B, 124B) de cette dernière, et on oriente ledit support vers la paroi latérale de la chambre.

10. Procédé selon les revendications 6 et 7, et l'une quelconque des revendications 1 à 9, **caractérisé en ce qu'**on fournit un troisième bloc de moule (20D, 120B, 220D), analogue aux premier et deuxième blocs de moule (20A, 20B, 120A, 120C, 220A, 220B) et solidaire de ces derniers en pivotement autour de l'axe de basculement (A), **en ce qu'**on place respectivement lesdits blocs dans la position de travail (T, T1), dans la première position basculée (B1) et dans la deuxième position basculée (B2), et **en ce qu'**on dispose simultanément une étiquette de fond (32A, 132A, 232A) dans la chambre de thermoformage (24, 124, 224) d'un bloc de moule (20B, 120C, 220B) dans la première position basculée (B1) et un décor latéral (42A, 52A, 152A, 252A)dans la chambre de thermoformage d'un autre bloc de moule (20D, 120B, 220D) dans la deuxième position basculée (B2), alors que le troisième bloc de moule (20A, 120A, 220A) est dans sa position de travail (T, T1).

11. Procédé selon l'une quelconque des revendications 1 à 10, **caractérisé en ce qu'**on fournit au moins un premier et un deuxième bloc de moule (220A, 220B) ayant au moins une première et une deuxième chambre de thermoformage (224), lesdits blocs étant solidaires en pivotement autour de l'axe de basculement (A), **en ce que** l'on place l'un (220A) des blocs de moule en position (T1) de travail de thermoformage pour thermoformer des récipients (R) dans la chambre (124) de ce bloc, tandis que l'on place l'autre bloc de moule (220B) dans la première position basculée (B1) pour mettre en place une étiquette de fond (232A) dans la première chambre (R3, R4) dudit autre bloc, puis on place ledit un des blocs de moule (220A) en position (T2) de travail de démoulage pour démouler les récipients (R) thermoformés, tandis que l'on place ledit autre bloc (220B) dans la première position basculée (B1) pour mettre en place une étiquette de fond (232A) dans la deuxième chambre (R1, R2) dudit autre bloc.

12. Dispositif (10, 110) pour fabriquer des récipients par thermoformage et mettre en place sur ces récipients (R), des décors comprenant des étiquettes de fond (32A, 132A, 232A), le dispositif comprenant au moins un premier bloc de moule (20A, 120A, 220A) qui comporte au moins une chambre de thermoformage (24, 124, 224) ayant un bord ouvert (24B, 124B) et un fond (24C, 124C), ledit bloc de moule étant apte à occuper une position de travail (T, T1) pour le thermoformage d'un récipient (R) dans cette chambre, dans lequel ledit bloc de moule (20A, 120A, 220A) est monté pivotant autour d'un axe de basculement (A) et est ainsi apte à occuper, en plus de ladite position de travail (T, T1), une première position basculée (B1), le dispositif comportant un poste d'étiquetage de fond (36, 136) ayant des moyens pour pousser une étiquette de fond (32A, 132A, 232A) dans la chambre de thermoformage (24, 124, 224) à travers le bord ouvert (24B, 124B) de cette chambre alors que ledit bloc est dans ladite première position basculée (B1) et pour amener ladite étiquette de fond contre le fond (24C, 124C) de la chambre,
**caractérisé en ce que** le poste d'étiquetage de fond (30, 130, 230) comporte des moyens (34, 134) pour amener une bandelette à étiquettes (32, 132) en regard du bord ouvert (24B, 124B) de la chambre de thermoformage (24, 124, 224), dans un plan (PB) sensiblement parallèle au fond de ladite chambre, et des moyens (37A, 39A) pour découper une étiquette de fond (32A, 132A) dans ladite bandelette.

13. Dispositif selon la revendication 12, **caractérisé en ce que** le poste d'étiquetage (30, 130, 230) comprend un poussoir (36, 136) et un couteau (37A) apte à découper l'étiquette de fond (32A, 132A) dans la bandelette à étiquettes (32, 132) lors du déplacement de poussée dudit poussoir (36, 136).

14. Dispositif selon la revendication 12 ou 13, **caractérisé en ce que** les moyens pour pousser l'étiquette de fond (32A, 132A) dans la chambre de thermoformage comprennent un poussoir (36, 136) présentant une tête de poussée (37) aspirante, pour plaquer l'étiquette (32A, 132A) contre ladite tête.

15. Dispositif selon l'une quelconque des revendications 12 à 14, **caractérisé en ce qu'**il comporte, en outre, un deuxième bloc de moule (20B, 120C, 220B), analogue au premier bloc de moule (20A, 120A, 220A) et solidaire de ce dernier en pivotement autour de l'axe de basculement (A), et **en ce que** lesdits blocs de moule sont aptes à occuper simultanément la position de travail (T, T1) et la première position basculée (B1), respectivement, pour permettre la mise en place d'une étiquette de fond (32A, 132A, 232A) dans la chambre de thermoformage (24, 124, 224) de l'un (20B, 120C, 220B) desdits blocs de moule pendant le thermoformage (20A, 120A, 220A) d'un récipient (R) dans la chambre de thermoformage (24, 124, 224) de l'autre bloc de moule.

16. Dispositif selon l'une quelconque des revendications 12 à 15, **caractérisé en ce que** le premier bloc de moule (20A, 120A, 220A) est apte à occuper, en outre, une deuxième position basculée (B2) et **en ce que** le dispositif comporte en outre un poste (40, 50, 150, 250) de mise en place d'un décor latéral pour mettre en place un décor latéral (42A, 52A, 15A, 252A) dans la chambre de thermoformage (24, 124, 224) dudit bloc de moule (20A, 120A, 220A), alors que ce dernier est dans ladite deuxième position basculée (B2).

17. Dispositif selon la revendication 16, **caractérisé en ce que** le poste de mise en place d'un décor latéral est un poste de banderolage (40) ou un poste de mise en place d'étiquettes latérales (50, 150).

18. Dispositif selon la revendication 16, **caractérisé en ce que** le poste de mise en place d'un décor latéral est un poste (50, 150) de mise en place d'étiquettes latérales et comprend des moyens (131) pour pousser une étiquette latérale (52A, 152A) dans la chambre de thermoformage (24, 124) à travers le bord ouvert (24B, 124B) de cette dernière et pour orienter ladite étiquette latérale (52A, 152A) contre une paroi latérale (24A, 124A) de ladite chambre (24, 124).

19. Dispositif selon la revendication 18, **caractérisé en ce que** le poste (150) de mise en place d'un décor latéral comprend un support d'étiquettes (157) latérales apte à pénétrer dans la chambre de thermoformage (124) et à être orienté vers ladite paroi latérale (124A) de la chambre.

20. Dispositif selon la revendication 19, **caractérisé en ce que** le support (157) est formé par la tête pivotante d'un poussoir (156).

21. Dispositif selon la revendication 19 ou 20, **caractérisé en ce que** le support (157) comporte une surface de support aspirante.

22. Dispositif selon l'une quelconque des revendications 19 à 21, **caractérisé en ce que**, le bloc de moule (120A) comprenant au moins deux chambres de thermoformage (124), le poste de mise en place d'étiquettes latérales (150) comprend deux supports d'étiquettes (157) aptes à être ramenés l'un vers l'autre pour disposer une étiquette (152A) dans chacune desdites chambres.

23. Dispositif selon les revendications 15 et 16 et l'une quelconque des revendications 12 à 22, **caractérisé en ce qu'**il comporte, en outre, au moins un troisième bloc de moule (20D, 120B, 220D), analogue aux premier et deuxième bloc de moule (20A, 20B, 120A, 120C, 220A, 220B) et solidaire de ces dernier en pivotement autour de l'axe de basculement (A), et **en ce que** lesdits blocs de moule sont aptes à occuper simultanément la position de travail (T, T1), la première position basculée (B1) et la deuxième position basculée (B2), respectivement, pour permettre la mise en place d'une étiquette de fond (32A, 132A, 232A) dans la chambre de thermoformage (24, 124, 224) de l'un (20B, 120C, 220B) desdits blocs de moule occupant la première position basculée (B1) et la mise en place d'un décor latéral (42A, 52A, 152A, 252A) dans la chambre de thermoformage (24, 124, 224) d'un autre desdits blocs de moule (20D, 120B, 220D) occupant la deuxième position basculée (B2) pendant le thermoformage d'un récipient (R) dans la chambre de thermoformage (24, 124, 224) du troisième bloc de moule (20A, 120A, 220A) occupant la position de travail (T, T1).

24. Dispositif selon l'une quelconque des revendications 12 à 23, **caractérisé en ce qu'**il comprend au moins au moins un premier et un deuxième bloc de moule (220A, 220B) ayant au moins une première et une deuxième chambre de thermoformage (224), lesdits blocs étant solidaires en pivotement autour de l'axe de basculement (A) et aptes à être déplacés simultanément en translation (D) perpendiculairement audit axe, de telle sorte que la position de travail d'un bloc de moule comprend une position de travail de thermoformage (T1) dans laquelle un récipient (R) peut être thermoformé dans la chambre de thermoformage (224) dudit bloc et une position de travail de démoulage (T2), dans laquelle le récipient thermoformé (R) peut être démoulé, et **en ce que** le poste d'étiquetage de fond (230) est apte à mettre en place une étiquette de fond (232A) dans la première chambre de thermoformage (R3, R4) d'un bloc de moule (220B) pendant que l'autre bloc de moule (220A) est dans sa position de travail de thermoformage (T1) et à mettre en place une étiquette de fond (232A) dans la deuxième chambre de thermoformage (R1, R2) dudit un bloc de moule (220B) pendant que ledit autre bloc (220A) est dans la position de travail de démoulage (T2).

## Claims

1. A method of manufacturing containers (R) by thermoforming, and of putting decorations comprising bottom labels (32A, 132A, 232A) into place on the containers, in which at least a first mold block (20A, 120A, 220A) is provided that has at least one thermoforming chamber (24, 124, 224) having an open edge (24B, 124B) and an end wall (24C, 124C), and a container (R) is thermoformed in said chamber while said mold block is in a working position (T, T1), and in which, in order to put a bottom label (32A, 132A, 232A) into place on a container (R), the mold block (20A, 120A, 220A) is caused to pivot about a tilt axis (A) so as to place said block in a first tilted position (B1), the bottom label (32A, 132A, 232A) is pushed into the thermoforming chamber (24, 124, 224) through the open edge (24B, 124B) of said chamber, until said bottom label (32A, 132A, 232A) is pushed against the end wall (24C, 124C) of the chamber (24, 124, 224) while the mold block (20A, 120A, 220A) is in said first tilted position (B1), and then the mold block is caused to pivot about the tilt axis so as to bring said block into the working position (T) and a container (R) is thermoformed inside the chamber (24, 124, 224);
said method is **characterized in that** a label strip (32, 132) is brought to face the open edge (24B, 124B) of the thermoforming chamber (24, 124), in a plane (PB) substantially parallel to the end wall (24, 124C) of said chamber, a bottom label (32A, 132A) is cut from said strip (32, 132) and the cut bottom label is pushed into the thermoforming chamber (24, 124).

2. A method according to claim 1, **characterized in that** the bottom label (32A, 132A) is cut by means of a blade (37A) that moves with a pusher (36, 136) over at least a fraction of the stroke thereof, and the bottom label is pushed into the chamber (24, 124) by means of said pusher (36, 136).

3. A method according to claim 1 or claim 2, **characterized in that**, in order to cut the bottom label (32A, 132A), the strip (32, 132) is brought into said plane (PB) substantially parallel to the end wall (24C, 124C) of the chamber (24, 124) by placing the strip against a counter-blade (39A).

4. A method according to claims 2 and 3, **characterized in that** an outside face (32') of the strip (32) that is opposite the pusher (36) is placed against the counter-blade (39A).

5. A method according to any one of claims 1 to 4, **characterized in that** the bottom label (32A, 132A, 232A) is pushed into the chamber by means of a pusher (36, 136) while said label is also pressed against said pusher by suction.

6. A method according to any one of claims 1 to 5, **characterized in that** a second mold block (20B, 120B, 220B) is provided that is analogous to the first mold block (20A, 120A, 220A) and that is constrained to pivot therewith about the tilt axis (A), and a bottom label (32A, 132A, 232A) is placed inside the thermoforming chamber (24, 124, 224) of one of the mold blocks (20B, 120C, 220B) in its first tilted position (B1) while the other mold block (20A, 120A, 220A) is in the working position (T, T1).

7. A method according to any one of claims 1 to 6, **characterized in that** the decorations further comprise a side decoration (42A, 52A, 152A 252A) and **in that** the first mold block (20A, 120A, 220A) is also placed in a second tilted position (B2), and said side decoration is inserted into the thermoforming chamber (24, 124, 224) while said mold block is in the second tilted position (B2).

8. A method according to claim 7, **characterized in that** the side decoration is a band label (42A) or a side label (52A, 152A).

9. A method according to claim 7, **characterized in that** the side decoration is a side label (52A, 152A), and **in that**, in order to put said side label into place against a side wall (24A, 124A) of the thermoforming chamber (24, 124) of said at last one mold block, said label is placed on a support (157), said support is inserted into said chamber through the open edge (24B, 124B) thereof, and said support is directed towards the side wall of the chamber.

10. A method according to claims 6 and 7, and to any one of claims 1 to 9, **characterized in that** a third mold block (20D, 120B, 220D) is provided that is analogous to the first and second mold blocks (20A, 20B, 120A, 120C, 220A, 220B), and that is constrained to pivot with said first and second mold blocks about the tilt axis (A), **in that** said blocks are placed respectively in the working position (T, T1), in the first tilted position (B1), and in the second tilted position (B2), and **in that**, simultaneously, a bottom label (32A, 132A, 232A) is placed inside the thermoforming chamber (24, 124, 224) of a mold block (20B, 120C; 220B) in the first tilted position (B1), and a side decoration (42A, 52A, 152A, 252A) is placed in the thermoforming chamber of another mold block (20D, 120B, 220D) in the second tilted position (B2), while the third mold block (20A, 120A, 220A) is in its working position (T, T1).

11. A method according to any one of claims 1 to 10, **characterized in that** at least first and second mold blocks (220A, 220B) are provided, each of which has at least first and second thermoforming chambers (224), said blocks being constrained to pivot with each other about the tilt axis (A), and **in that** one of the mold blocks (220A) is placed in the thermoforming working position (T1) so as to thermoform containers (R) inside the chambers (124) of said block, while the other mold block (220B) is placed in the first tilted position (B1) so as to put a bottom label (232A) into place inside the first chamber (R3, R4) of said other block, and then said one of the mold blocks (220A) is placed in an unmolding working position (T2) for unmolding the thermoformed containers (R), while said other block (220B) is placed in the first tilted position (B1) so as to put a bottom label (232A) into place inside the second chamber (R1, R2) of said other block.

12. A device (10, 110) for manufacturing containers by thermoforming, and for putting decorations comprising bottom labels (32A, 132A, 232A) into place on the containers (R), the device including at least a first mold block (20A, 120A, 220A) that has at least one thermoforming chamber (24, 124, 224) having an open edge (24B, 124B) and an end wall (24C, 124C), said mold block being suitable for taking up a working position (T, T1) for thermoforming a container (R) in said chamber, in which, said mold block (20A, 120A, 220A) is mounted to pivot about a tilt axis (A), and is thus suitable, in addition to taking up said working position (T, T1), for taking up a first tilted position (B1), the device having a bottom-labeling unit (36, 136) having means for pushing a bottom label (32A, 132A, 232A) into the thermoforming chamber (24, 124, 224) through the open edge (24B, 124B) of said chamber while said block is in said first tilted position (B1) and for bringing said bottom label against the end wall (24C, 124C) of the chamber;
said device being **characterized in that** the bottom-labeling unit (30, 130, 230) has means (34, 134) for bringing a label strip (32, 132) to face the open edge (24B, 124B) of the thermoforming chamber (24, 124, 224), in a plane (PB) substantially parallel to the end wall of said chamber, and means (37A, 39A) for cutting a bottom label (32A, 132A) from said strip.

13. A device according to claim 12, **characterized in that** the labeling unit (30, 130, 230) has a pusher (36, 136) and a blade (37A) suitable for cutting the bottom label (32A, 132A) from the label strip (32, 132) as said pusher (36, 136) moves.

14. A Device according to claim 12 or claim 13, **characterized in that** the means for pushing the bottom label (32A, 132A) into the thermoforming chamber comprise a pusher (36, 136) having a thrust head (37) that is provided with suction means for pressing the label (32A, 132A) against said head.

15. A device according to any one of claims 12 to 14, **characterized in that**, in addition, it has a second mold block (20B, 120C, 220B) that is analogous to the first mold block (20A, 120A, 220A) and that is constrained to pivot therewith about the tilt axis (A), and **in that** said mold blocks are suitable for simultaneously taking up respectively the working position (T, T1) and the first tilted position (B1), so as to enable a bottom label (32A, 132A, 232A) to be placed inside the thermoforming chamber (24, 124, 224) of one of said mold blocks (20B, 120C, 220B) while a container (R) is being thermoformed inside the thermoforming chamber (24, 124, 224) of the other mold block.

16. A device according to any one of claims 12 to 15, **characterized in that** the first mold block (20A, 120A, 220A) is suitable for also taking up a second tilted position (B2), and **in that** the device also has a unit (40, 50, 150, 250) for putting a side decoration (42A, 52A, 15A, 252A) into place inside the thermoforming chamber (24, 124, 224) of said mold block (20A, 120A, 220A), while said mold block is in said second tilted position (B2).

17. A device according to claim 16, **characterized in that** the unit for putting a side decoration into place is a banding unit (40) or a unit for putting side labels (50, 150) into place.

18. A device according to claim 16, **characterized in that** the unit for putting a side decoration into place is a unit (50, 150) for putting side labels into place and has means (131) for pushing a side label (52A, 152A) into the thermoforming chamber (24, 124) through the open edge (24B, 124B) thereof, and for directing said side label (52A, 152A) against a side wall (24A, 124A) of said chamber (24, 124).

19. A device according to claim 18, **characterized in that** the unit (150) for putting a side decoration into place has a side-label support (157) that is suitable for penetrating into the thermoforming chamber (124), and for being directed towards said side wall (124A) of the chamber.

20. A device according to claim 19, **characterized in that** the support (157) is formed by the pivotally mounted head of a pusher (156).

21. A device according to claim 19 or claim 20, **characterized in that** the support (157) has a suction support surface.

22. A device according to any one of claims 19 to 21, said device being **characterized in that**, with the mold block (120A) having at least two thermoforming chambers (124), the unit (150) for putting side labels into place comprises two label supports (157) suitable for being brought towards each other so as to place one label (152A) in each of said chambers.

23. A device according to claim 15 or 16, and to any one of claims 12 to 22, **characterized in that** it also has at least a third mold block (20D, 120B, 220D) that is analogous to the first and second mold blocks (20A, 20B, 120A, 120C, 220A, 220B), and that is constrained to pivot with said first and second mold blocks about the tilt axis (A), and **in that** said mold blocks are suitable for taking up simultaneously and respectively the working position (T, T1), the first tilted position (B1), and the second tilted position (B2), so as to make it possible to put a bottom label (32A, 132A, 232A) into place inside the thermoforming chamber (24, 124, 224) of one of said mold blocks (20B, 120C, 220B) that is in the first tilted position (B1), and to put a side decoration (42A, 52A, 152A, 252A) into place inside the thermoforming chamber (24, 124, 224) of another one of said mold blocks (20D, 120B, 220D) that is in the second tilted position (B2), while a container (R) is being thermoformed in the thermoforming chamber (24, 124, 224) of the third mold block (20A, 120A, 220A) that is in the working position (T, T1).

24. A device according to any one of claims 12 to 23, **characterized in that** it has at least first and second mold blocks (220A, 220B), each of which has at least first and second thermoforming chambers (224), said blocks being constrained to pivot with each other about the tilt axis (A), and being suitable for being moved simultaneously in translation (D) perpendicularly to said axis, so that the working position of a mold block comprises a thermoforming working position (T1) in which a container (R) can be thermoformed in the thermoforming chamber (224) of said block, and an unmolding working position (T2) in which the thermoformed container (R) can be unmolded, and **in that** the bottom-labeling unit (230) is suitable for putting a bottom label (232A) into place inside the first thermoforming chamber (R3, R4) of a mold block (220B) while the other mold block (220A) is in its thermoforming working position (T1), and for putting a bottom label (232A) into place in the second thermoforming chamber (R1, R2) of said one mold block (220B) while said other block (220A) is in the unmolding working position (T2).

## Patentansprüche

1. Verfahren zur Herstellung von Behältern (R) durch Wärmeformung und zur Anbringung von Bodenetiketten (32A, 132A, 232A) umfassenden Dekorteilen auf diesen Behältern, bei dem mindestens ein erster Formblock (20A, 120A, 220A) bereitgestellt wird, der mindestens eine Wärmeformkammer (24, 124, 224) mit einem offenen Rand (24B, 124B) und einem Boden (24C, 124C) umfaßt, und bei dem ein Behälter (R) in dieser Kammer durch Wärme geformt wird, während sich der Formblock in Arbeitsposition (T, T1) befindet, in der zur Anbringung einer Bodenetikette (32A, 132A, 232A) auf einem Behälter (R) der Formblock (20A, 120A, 220A) um eine Kippachse (A) geschwenkt wird, um den Block in einer ersten Kippposition (B1) anzuordnen, die Bodenetikette (32A, 132A, 232A) in die Wärmeformkammer (24, 124, 224) durch den offenen Rand (24B, 124B) dieser Kammer geschoben wird, bis die Bodenetikette (32A, 132A, 232A) am Boden (24C, 124C) der Kammer (24, 124, 224) anliegt, während sich der Formblock (20A, 120A, 220A) in der ersten Kippposition (B1) befindet, wobei dann der Formblock um die Kippachse geschwenkt wird, bis dieser Block in Arbeitsposition (T) gebracht ist, und ein Behälter (R) in der Kammer (24, 124, 224) durch Wärme geformt wird,
**dadurch gekennzeichnet, daß** ein Etikettenband (32, 132) gegenüber dem offenen Rand (24B, 124B) der Wärmeformkammer (24, 124) in einer Ebene (PB) im Wesentlichen parallel zum Boden (24C, 124C) der Kammer angeordnet wird, eine Bodenetikette (32A, 132A) aus dem Band (32, 132) ausgeschnitten wird, und die ausgeschnittene Bodenetikette in die Wärmeformkammer (24, 124) geschoben wird.

2. Verfahren nach Anspruch 1, **dadurch gekennzeichnet, daß** die Bodenetikette (32A, 132A) mit Hilfe eines Messers (37A) ausgeschnitten wird, das die Bewegung eines Schiebers (36, 136) auf mindestens einem Teil des Weges desselben begleitet, und daß die Bodenetikette in die Kammer (24, 124) mit Hilfe dieses Schiebers (36, 136) geschoben wird.

3. Verfahren nach Anspruch 1 oder 2, **dadurch gekennzeichnet, daß** zum Ausschneiden der Bodenetikette (32A, 132A) das Band (32, 132) in die Ebene (PB) im Wesentlichen parallel zum Boden (24C, 124C) der Kammer (24, 124) gebracht wird, wobei das Band an einem Gegenmesser (39A) angeordnet wird.

4. Verfahren nach den Ansprüchen 2 und 3, **dadurch gekennzeichnet, daß** an dem Gegenmesser (39A) eine Außenseite (32') des Bandes (32), die dem Schieber (36) gegenüber liegt, angeordnet wird.

5. Verfahren nach einem der Ansprüche 1 bis 4, **dadurch gekennzeichnet, daß** die Bodenetikette (32A, 132A, 232A) in die Kammer mit Hilfe eines Schiebers (36, 136) geschoben wird, wobei die Etikette an den Schieber durch Ansaugung angedrückt wird.

6. Verfahren nach einem der Ansprüche 1 bis 5, **dadurch gekennzeichnet, daß** ein zweiter Formblock (20B, 120B, 220B) analog zum ersten Formblock (20A, 120A, 220A) und mit diesem schwenkbar um die Kippachse (A) verbunden, bereitgestellt wird, und daß eine Bodenetikette (32A, 132A, 232A) in der Wärmeformkammer (24, 124, 224) eines (20B, 120C, 220B) der Formblöcke in seiner ersten Kippposition (B1) angeordnet wird, während sich der andere Formblock (20A, 120A, 220A) in einer Arbeitsposition (T, T1) befindet.

7. Verfahren nach einem der Ansprüche 1 bis 6, **dadurch gekennzeichnet, daß** die Dekorteile ferner ein seitliches Dekor (42A, 52A, 152A, 252A) umfassen, und daß ferner der erste Formblock (20A, 120A, 220A) in einer zweiten Kippposition (B2) angeordnet wird und das seitliche Dekor in die Wärmeformkammer (24, 124, 224) eingeführt wird, während sich der Formblock in der zweiten Kippposition (B2) befindet.

8. Verfahren nach Anspruch 7, **dadurch gekennzeichnet, daß** das seitliche Dekor eine Banderole (42A) oder eine Seitenetikette (52A, 152A) ist.

9. Verfahren nach Anspruch 7, **dadurch gekennzeichnet, daß** das seitliche Dekor eine Seitenetikette (52A, 152A) ist und daß zum Anbringen der Seitenetikette an einer Seitenwand (24A, 124A) der Wärmeformkammer (24, 124) des mindestens einen Formblocks die Etikette auf einem Träger (157) angeordnet wird, dieser Träger in die Kammer durch den offenen Rand (24B, 124B) dieser letztgenannten eingeführt und der Träger zur Seitenwand der Kammer ausgerichtet wird.

10. Verfahren nach den Ansprüchen 6 und 7 und einem der Ansprüche 1 bis 9, **dadurch gekennzeichnet, daß** ein dritter Formblock (20D, 120B, 220D) analog zu den ersten und zweiten Formblöcken (20A, 20B, 120A, 120C, 220A, 220B) und mit diesen letztgenannten schwenkbar um die Kippachse (A) verbunden, bereitgestellt wird, und daß die Blöcke jeweils in Arbeitsposition (T, T1) in der ersten Kippposition (B1) und in der zweiten Kippposition (B2) angeordnet werden, und daß gleichzeitig eine Bodenetikette (32A, 132A, 232A) in der Wärmeformkammer (24, 124, 224) eines Formblocks (20B, 120C, 220B) in der ersten Kippposition (B1) und ein seitliches Dekor (42A, 52A, 152A, 252A) in der Wärmeformkammer eines anderen Formblocks (20D, 120B, 220D) in der zweiten Kippposition (B2) angeordnet werden, während sich der dritte Formblock (20A, 120A, 220A) in seiner Arbeitsposition (T, T1) befindet.

11. Verfahren nach einem der Ansprüche 1 bis 10, **dadurch gekennzeichnet, daß** mindestens ein erster und ein zweiter Formblock (220A, 220B) mit mindestens einer ersten und einer zweiten Wärmeformkammer (224) bereitgestellt werden, wobei die Blöcke schwenkbar um die Kippachse (A) verbunden sind, daß einer (220A) der Formblöcke in Arbeitsposition (T1) zum Wärmeformen der Behälter (R) in der Kammer (124) dieses Blocks angeordnet wird, während der andere Formblock (220B) in der ersten Kippposition (B1) angeordnet wird, um eine Bodenetikette (232A) in der ersten Kammer (R3, R4) des anderen Blocks anzuordnen, daß dann einer der Formblöcke (220A) in Arbeitsposition (T2) zum Entformen der durch Wärme geformten Behälter (R) angeordnet wird, während der andere Block (220B) in der ersten Kippposition (B1) angeordnet wird, um eine Bodenetikette (232A) in der zweiten Kammer (R1, R2) des anderen Blocks anzuordnen.

12. Vorrichtung (10, 110) zur Herstellung von Behältern durch Wärmeformung und zum Anbringen von Bodenetiketten (32A, 132A, 232A) umfassenden Dekorteilen auf diesen Behältern (R), wobei die Vorrichtung mindestens einen ersten Formblock (20A, 120A, 220A) umfaßt, der mindestens eine Wärmeformkammer (24, 124, 224) mit einem offenen Rand (24B, 124B) und einem Boden (24C, 124C) umfaßt, wobei der Formblock eine Arbeitsposition (T, T1) zum Wärmeformen eines Behälters (R) in dieser Kammer einnehmen kann, in der der Formblock (20A, 120A, 220A) schwenkbar um eine Kippachse (A) montiert ist und so zusätzlich zur Arbeitsposition (T, T1) eine erste Kippposition (B1) einnehmen kann, wobei die Vorrichtung eine Station zur Anbringung von Bodenetiketten (36, 136) mit Mitteln zum Schieben einer Bodenetikette (32A, 132A, 232A) in die Wärmeformkammer (24, 124, 224) durch den offenen Rand (24B, 124B) dieser Kammer, während sich der Block in der ersten Kippposition (B1) befindet, und zum Anordnen der Bodenetikette am Boden (24C, 124C) der Kammer umfaßt,
**dadurch gekennzeichnet, daß** die Station zum Anbringen einer Bodenetikette (30, 130, 230) Mittel (34, 134) umfaßt, um ein Etikettenband (32, 132) gegenüber dem offenen Rand (24B, 124B) der Wärmeformkammer (24, 124, 224) in einer Ebene (PB) im Wesentlichen parallel zum Boden der Kammer anzuordnen, und Mittel (37A, 39A), um eine Bodenetikette (32A, 132A) aus dem Band auszuschneiden.

13. Vorrichtung nach Anspruch 12, **dadurch gekennzeichnet, daß** die Etikettierstation (30, 130, 230) einen Schieber (36, 136) und ein Messer (37A) umfaßt, das die Bodenetikette (32A, 132A) aus dem Etikettenband (32, 132) bei der Schiebebewegung des Schiebers (36, 136) ausschneiden kann.

14. Vorrichtung nach Anspruch 12 oder 13, **dadurch gekennzeichnet, daß** die Mittel zum Schieben der Bodenetikette (32A, 132A) in die Wärmeformkammer einen Schieber (36, 136) umfassen, der einen ansaugenden Schiebekopf (37) umfaßt, um die Etikette (32A, 132A) gegen diesen Kopf anzudrücken.

15. Vorrichtung nach einem der Ansprüche 12 bis 14, **dadurch gekennzeichnet, daß** sie ferner einen zweiten Formblock (20B, 120B, 220B) analog zum ersten Formblock (20A, 120A, 220A) und mit diesem letztgenannten schwenkbar um die Kippachse (A) verbunden, umfaßt, und daß die Formblöcke gleichzeitig die Arbeitsposition (T, T1) bzw. die erste Kippposition (B1) einnehmen können, um die Anbringung einer Bodenetikette (32A, 132A, 232A) in der Wärmeformkammer (24, 124, 224) eines (20B, 120C, 220B) der Formblöcke während der Wärmeformung (20A, 120A, 220A) eines Behälters (R) in der Wärmeformkammer (24, 124, 224) des anderen Formblocks zu ermöglichen.

16. Vorrichtung nach einem der Ansprüche 12 bis 15, **dadurch gekennzeichnet, daß** der erste Formblock (20A, 120A, 220A) ferner eine zweite Kippposition (B2) einnehmen kann, und daß die Vorrichtung ferner eine Station (40, 50, 150, 250) eines seitlichen Dekors umfaßt, um ein seitliches Dekor (42A, 52A, 15A, 252A) in der Wärmeformkammer (24, 124, 224) des Formblocks (20A, 120A, 220A) anzubringen, während sich dieser letztgenannte in der zweiten Kippposition (B2) befindet.

17. Vorrichtung nach Anspruch 16, **dadurch gekennzeichnet, daß** die Station zur Anbringung eines seitlichen Dekors eine Station zur Anbringung einer Banderole (40) oder eine Station zur Anbringung von Seitenetiketten (50, 150) ist.

18. Vorrichtung nach Anspruch 16, **dadurch gekennzeichnet, daß** die Station zur Anbringung eines seitlichen Dekors eine Station (50, 150) zur Anbringung von Seitenetiketten ist und Mittel (131) umfaßt, um eine Seitenetikette (52A, 152A) in die Wärmeformkammer (24, 124) durch den offenen Rand (24B, 124B) dieser letztgenannten zu schieben und die Seitenetikette (52A, 152A) gegen eine Seitenwand (24A, 124A) der Kammer (24, 124) auszurichten.

19. Vorrichtung nach Anspruch 18, **dadurch gekennzeichnet, daß** die Station (150) zur Anbringung eines seitlichen Dekors einen Träger für Seitenetiketten (157) umfaßt, der in die Wärmeformkammer (124) eindringen und zur Seitenwand (124A) der Kammer ausgerichtet werden kann.

20. Vorrichtung nach Anspruch 19, **dadurch gekennzeichnet, daß** der Träger (157) von dem Schwenkkopf eines Schiebers (156) gebildet ist.

21. Vorrichtung nach Anspruch 19 oder 20, **dadurch gekennzeichnet, daß** der Träger (157) eine ansaugende Tragfläche umfaßt.

22. Vorrichtung nach einem der Ansprüche 19 bis 21, **dadurch gekennzeichnet, daß**, da der Formblock (120A) mindestens zwei Wärmeformkammern (124) umfaßt, die Station zur Anbringung von Seitenetiketten (150) zwei Etikettenträger (157) umfaßt, die zueinander gebracht werden können, um eine Etikette (152A) in jeder der Kammern anzuordnen.

23. Vorrichtung nach den Ansprüchen 15 und 16 und einem der Ansprüche 12 bis 22, **dadurch gekennzeichnet, daß** sie ferner mindestens einen dritten Formblock (20D, 120B, 220D) analog zu den ersten und zweiten Formblöcken (20A, 20B, 120A, 120C, 220A, 220B) und mit diesen letztgenannten schwenkbar um die Kippachse (A) verbunden, umfaßt, und daß die Formblöcke gleichzeitig die Arbeitsposition (T, T1), die erste Kippposition (B1) bzw. die zweite Kippposition (B2) einnehmen können, um die Anbringung einer Bodenetikette (32A, 132A, 232A) in der Wärmeformkammer (24, 124, 224) eines (20B, 120C, 220B) der Formblöcke, die die erste Kippposition (B1) einnehmen, und die Anbringung eines seitlichen Dekors (42A, 52A, 152A, 252A) in der Wärmeformkammer (24, 124, 224) eines anderen der Formblöcke (20D, 120B, 220D), der die zweite Kippposition (B2) während der Wärmeformung eines Behälters (R) in der Wärmeformkammer (24, 124, 224) des dritten Formblocks (20A, 120A, 220A), der die Arbeitsposition (T, T1) einnimmt, zu ermöglichen.

24. Vorrichtung nach einem der Ansprüche 12 bis 23, **dadurch gekennzeichnet, daß** sie mindestens einen ersten und einen zweiten Formblock (220A, 220B) mit mindestens einer ersten und einer zweiten Wärmeformkammer (224) umfaßt, wobei die Blöcke schwenkbar um die Kippachse (A) verbunden sind und gleichzeitig in Translation (D) senkrecht auf die Achse verschoben werden können, so daß die Arbeitsposition eines Formblocks eine Arbeitsposition zum Wärmeformen (T1), in der ein Behälter (R) in der Wärmeformkammer (224) des Blocks durch Wärme geformt werden kann, und eine Arbeitsposition zum Entformen (T2) umfaßt, in der der durch Wärme geformte Behälter (R) entformt werden kann, und daß die Station zur Anbringung von Bodenetiketten (230) eine Bodenetikette (232A) in der ersten Wärmeformkammer (R3, R4) eines Formblocks (220B) anbringen kann, während sich der andere Formblock (220A) in seiner Arbeitsposition zum Wärmeformen (T1) befindet, und eine Bodenetikette (232A) in der zweiten Wärmeformkammer (R1, R2) des einen Formblocks (220B) anbringen kann, während sich der andere Block (220A) in der Arbeitsposition zum Entformen (T2) befindet.
